(19) Europäisches Patentamt
European Patent Office
Office européen des brevets

(11) **EP 4 439 162 A1**

(12) **EUROPEAN PATENT APPLICATION**
published in accordance with Art. 153(4) EPC

(43) Date of publication:
**02.10.2024 Bulletin 2024/40**

(21) Application number: **22895738.7**

(22) Date of filing: **22.11.2022**

(51) International Patent Classification (IPC):
*G02F 1/1339* (2006.01)          *B32B 27/00* (2006.01)
*C08K 5/541* (2006.01)          *C08L 63/00* (2006.01)
*C08L 83/04* (2006.01)          *C08L 101/00* (2006.01)
*C09J 201/00* (2006.01)          *G02F 1/19* (2019.01)

(52) Cooperative Patent Classification (CPC):
**B32B 27/00; C08K 5/541; C08L 63/00;
C08L 83/04; C08L 101/00; C09J 201/00;
G02F 1/1339; G02F 1/19**

(86) International application number:
**PCT/JP2022/043163**

(87) International publication number:
**WO 2023/090457 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2021   JP 2021189156**

(71) Applicant: SEKISUI CHEMICAL CO., LTD.
**Osaka-shi
Osaka
530-8565 (JP)**

(72) Inventors:
• **OOKURA, Kouki**
 **Mishima-gun, Osaka 618-0021 (JP)**
• **YAMADA, Yasuyuki**
 **Mishima-gun, Osaka 618-0021 (JP)**
• **WAKIYA, Takeshi**
 **Mishima-gun, Osaka 618-0021 (JP)**

(74) Representative: **Ter Meer Steinmeister & Partner
Patentanwälte mbB
Nymphenburger Straße 4
80335 München (DE)**

(54) **ADHESIVE PARTICLES AND LAMINATE**

(57)      Provided is an adhesive particle capable of sufficiently enhancing adhesiveness, suppressing peeling from a base material, and controlling a gap between base materials with high accuracy. The adhesive particle according to the present invention includes a base particle and a covering portion disposed on a surface of the base particle, in which the covering portion contains a thermosetting resin, and a 10% K value at 25°C is 100 N/mm$^2$ or more and 3000 N/mm$^2$ or less.

[FIG. 1]

Processed by Luminess, 75001 PARIS (FR)

EP 4 439 162 A1

## Description

### TECHNICAL FIELD

The present invention relates to an adhesive particle and a laminate using the adhesive particles.

### BACKGROUND ART

A dimming material such as a dimming glass or a dimming film may be used for a display device such as a liquid crystal display device or an on-vehicle display. The dimming materials are materials that has a property that light transmittance changes depending on whether an electric field is applied or not, and can adjust an amount of incident light. In recent years, with an increase in screen size and a curved surface of a display device, there is an increasing need for a dimming material having a curved surface portion. In the dimming material, particles are used as a spacer in order to control a gap between base materials. In the dimming material, an adhesive may be used for bonding two glass or film base materials.

A liquid crystal display element is configured such that a liquid crystal is disposed between two glass or film base materials. In the liquid crystal display element, particles are used as the spacer in order to control the gap between the base materials. In the liquid crystal display element, an adhesive may be used for bonding two glass or film base materials.

Patent Document 1 below discloses a particle including a base particle and a covering portion disposed on a surface of the base particle. In the particle, a material of the covering portion is a compound having a specific structure. Patent Document 1 describes a thermoplastic resin as the material of the covering portion.

Patent Document 2 below discloses curable resin particles formed of a photocurable compound or a thermosetting compound.

Related Art Document

Patent Document

Patent Document 1:    JP 2018-132740 A
Patent Document 2:    JP 2016-218257 A

### SUMMARY OF THE INVENTION

### PROBLEMS TO BE SOLVED BY THE INVENTION

In recent years, with the increase in screen size and flexibility of the display device, there is an increasing need for an adhesive having higher adhesiveness. In order to further enhance the adhesiveness, it is conceivable to use particles having adhesiveness (adhesive particles).

In the case of particle in which the surface of the base particle is coated with a thermoplastic resin as in Patent Document 1, it is assumed that the particle itself has little adhesiveness.

In the conventional adhesive particles, it may be difficult to sufficiently enhance the adhesiveness. In an adhesive particle including a mother particle and an adhesive layer covering the mother particle, the adhesive layer cannot be made sufficiently thick, and as a result, it may be difficult to sufficiently enhance the adhesiveness of the particle. At the time of heating, the adhesive layer melts to cause dripping, and as a result, the adhesiveness may be deteriorated.

In a laminate using particles having insufficient adhesiveness, the particles are peeled off from the base material, and the gap between the base materials tends to vary. In particular, when the laminate has a curved surface portion, it is very difficult to suppress peeling of the spacer particles from the base material and to ensure uniformity of the gap between the base materials.

In a case where hardness of the adhesive particles after adhesion is high, when the base material is curved, a large pressure is applied to the base material in contact with the particles, so that the particles are peeled off from the base material, and the gap between the base materials may vary.

An object of the present invention is to provide an adhesive particle capable of sufficiently enhancing adhesiveness, suppressing peeling from a base material, and controlling a gap between the base materials with high accuracy. It is also an object of the present invention to provide a laminate using the adhesive particles.

**MEANS FOR SOLVING THE PROBLEMS**

According to a broad aspect of the present invention, there is provided an adhesive particle including a base particle and a covering portion disposed on a surface of the base particle, in which the covering portion contains a thermosetting resin, and a 10% K value at 25°C is 100 N/mm$^2$ or more and 3000 N/mm$^2$ or less.

In a specific aspect of the adhesive particle according to the present invention, the 10% K value at 25°C after heating the adhesive particle at 120°C for 1 hour is 110 N/mm$^2$ or more and 3500 N/mm$^2$ or less.

In a specific aspect of the adhesive particle according to the present invention, the 10% K value of the base particle at 25°C is 100 N/mm$^2$ or more and 3000 N/mm$^2$ or less.

In a specific aspect of the adhesive particle according to the present invention, a compression recovery rate at 25°C is 5% or more and 50% or less.

In a specific aspect of the adhesive particle according to the present invention, the covering portion has a thickness of 0.5 um or more and 5.0 um or less.

In a specific aspect of the adhesive particle according to the present invention, the covering portion contains a compound having a structure represented by the following formula (1).

$$R1\text{-}(SiO_pR3R4_q)_n\text{-}R2... \qquad (1)$$

In the formula (1), R1 and R2 each represent an organic group having an amino group, an organic group having an epoxy group, an organic group having an amide group, an organic group having an isocyanate group, or an organic group having a hydroxy group; R3 represents an alkyl group having 1 to 2 carbon atoms, an alkoxy group having 1 to 2 carbon atoms, or a vinyl group; p is 1 or 1.5; when p is 1, q is 1, and R4 represents a hydrogen atom, an alkyl group having 1 to 2 carbon atoms, an alkoxy group having 1 to 2 carbon atoms, or a vinyl group; when p is 1.5, q is 0; and n represents an integer of 1 to 100.

In a specific aspect of the adhesive particle according to the present invention, the thermosetting resin in the covering portion contains an epoxy resin.

According to a broad aspect of the present invention, there is provided a laminate including a first base material, a second base material, and spacer particles arranged between the first base material and the second base material, in which the spacer particles adhere to the first base material and the second base material, and a material of the spacer particles includes the adhesive particles described above.

In a specific aspect of the laminate according to the present invention, the spacer particle contains a compound having a structural unit represented by the following formula (11) .

$$\text{-}(SiO_pR3R4_q)_n\text{-}... \qquad (11)$$

In the formula (11), R3 represents an alkyl group having 1 to 2 carbon atoms, an alkoxy group having 1 to 2 carbon atoms, or a vinyl group; p is 1 or 1.5; when p is 1, q is 1, and R4 represents a hydrogen atom, an alkyl group having 1 to 2 carbon atoms, an alkoxy group having 1 to 2 carbon atoms, or a vinyl group; when p is 1.5, q is 0; and n represents an integer of 1 to 100.

In a specific aspect of the laminate according to the present invention, the laminate has a curved surface portion.

In a specific aspect of the laminate according to the present invention, the laminate is a dimmer laminate, and further includes a dimming layer disposed between the first base material and the second base material.

**EFFECT OF THE INVENTION**

The adhesive particle according to the present invention includes a base particle and a covering portion disposed on a surface of the base particle, in which the covering portion contains a thermosetting resin, and the 10% K value at 25°C is 100 N/mm$^2$ or more and 3000 N/mm$^2$ or less. Since the adhesive particle according to the present invention is provided with the above configuration, adhesiveness can be sufficiently enhanced, peeling from a base material can be suppressed, and a gap between the base materials can be controlled with high accuracy.

**BRIEF DESCRIPTION OF DRAWINGS**

[Fig. 1] Fig. 1 is a sectional view schematically showing an adhesive particle according to a first embodiment of the present invention.
[Fig. 2] Fig. 2 is a sectional view schematically showing a laminate using the adhesive particle according to the first embodiment of the present invention.

[Fig. 3] Fig. 3 is a sectional view schematically showing a PDLC-type dimmer laminate using the adhesive particle according to the first embodiment of the present invention.

[Fig. 4] Fig. 4 is a sectional view schematically showing a SPD-type dimmer laminate using the adhesive particle according to the first embodiment of the present invention.

## MODES FOR CARRYING OUT THE INVENTION

Hereinafter, the present invention will be described in detail. In the present specification, for example, " (meth)acrylate" means one or both of "acrylate" and "methacrylate", and " (meth) acryl" means one or both of "acryl" and "methacryl".

(Adhesive particle)

The adhesive particle according to the present invention includes a base particle and a covering portion disposed on a surface of the base particle. In the adhesive particle according to the present invention, the covering portion contains a thermosetting resin. In the adhesive particle according to the present invention, a 10% K value at 25°C is 100 N/mm$^2$ or more and 3000 N/mm$^2$ or less.

Since the adhesive particle according to the present invention is provided with the above configuration, adhesiveness of the adhesive particle can be sufficiently enhanced. Furthermore, since the adhesive particle according to the present invention is provided with the above configuration, when the adhesive particles are used as a material of spacer particles, peeling of the spacer particles from the base material can be suppressed, so that a gap between the base materials can be controlled with high accuracy. Since the adhesive particle according to the present invention is provided with the above configuration, it is possible to prevent the base material from being scratched. In addition, since the adhesive particle according to the present invention is provided with the above configuration, it is possible to suppress peeling of the base material when the adhesive particles are used in a dimmer laminate.

In a conventional laminate, when the laminate has a curved surface portion, it is very difficult to ensure uniformity of the gap between the base materials and to suppress peeling of the spacer particles from the base material. However, since the adhesive particle according to the present invention is provided with the above configuration, for example, even if the laminate has a curved surface portion, the adhesive particles do not move in the curved surface portion, and the uniformity of the gap between the base materials can be secured. Furthermore, in the adhesive particle according to the present invention, even when the laminate has a curved surface portion, peeling of the adhesive particles from the base material can be suppressed, so that the uniformity of the gap between the base materials can be secured. As a result, it is possible to suppress occurrence of defects such as color unevenness of a liquid crystal display device caused by non-uniformity of the gap.

Since the adhesive particles are spherical, a roll-to-roll process can be applied when manufacturing the laminate, and the manufacturing cost of the laminate can be reduced. The spherical shape is not limited to a perfect spherical shape, and includes a substantially spherical shape, for example, a shape having an aspect ratio (major axis/minor axis) of 1.5 or less.

The 10% K value of the adhesive particle at 25°C is 100 N/mm$^2$ or more and 3000 N/mm$^2$ or less. The 10% K value of the adhesive particle at 25°C is preferably 200 N/mm$^2$ or more, more preferably 300 N/mm$^2$ or more, still more preferably 1000 N/mm$^2$ or more, and preferably 2800 N/mm$^2$ or less, more preferably 2500 N/mm$^2$ or less, still more preferably 2000 N/mm$^2$ or less. When the 10% K value of the adhesive particle at 25°C is equal to or more than the above lower limit and equal to or less than the above upper limit, the effect of the present invention can be more effectively exhibited. In addition, scratching of the base material can be prevented. When the 10% K value of the adhesive particle at 25°C is equal to or more than the above lower limit and equal to or less than the above upper limit, peeling of the base material can be further suppressed when the adhesive particles are used in a dimmer laminate.

The 10% K value of the adhesive particle at 25°C can be measured as follows. Using a micro compression testing machine, the adhesive particles are compressed at a smooth indenter end face of a cylinder (diameter of 50 $\mu$m, made of diamond) under the conditions of loading at 25°C and a maximum test load of 20 mN over 60 seconds. The load value (N) and compression displacement (mm) at this time are measured. From the obtained measured value, the 10% K value at 25°C can be determined by the following formula. As the micro compression testing machine, for example, "Fischer Scope H-100" manufactured by FISCHER INSTRUMENTS K.K., or the like is used.

$$10\% \text{ K value } (N/mm^2) \text{ at } 25°C = (3/2^{1/2}) \cdot F \cdot S^{-3/2} \cdot R^{-1/2}$$

F: Load value (N) when the adhesive particle is 10% compressed and deformed
S: Compression displacement (mm) when the adhesive particle is 10% compressed and deformed
R: Radius of adhesive particle (mm)

The 10% K value at 25°C after heating the adhesive particles at 120°C for 1 hour is preferably 110 N/mm² or more, more preferably 150 N/mm² or more, still more preferably 300 N/mm² or more, and preferably 3500 N/mm² or less, more preferably 3000 N/mm² or less, still more preferably 2800 N/mm² or less. When the 10% K value at 25°C after heating the adhesive particles at 120°C for 1 hour is equal to or more than the above lower limit and equal to or less than the above upper limit, the effect of the present invention can be more effectively exhibited. In addition, scratching of the base material can be prevented. When the 10% K value at 25°C after heating the adhesive particles at 120°C for 1 hour is equal to or more than the above lower limit and equal to or less than the above upper limit, peeling of the base material can be further suppressed when the adhesive particles are used in a dimmer laminate.

The 10% K value at 25°C after heating the adhesive particles at 120°C for 1 hour (10% K value at 25°C after heating) can be measured as follows. The adhesive particles are heated at 120°C for 1 hour in an air constant temperature thermostat (for example, "DKN 302" manufactured by Yamato Scientific Co., Ltd.). Using a micro compression testing machine, the adhesive particles after heating are compressed at a smooth indenter end face of a cylinder (diameter of 50 μm, made of diamond) under the conditions of loading at 25°C and a maximum test load of 20 mN over 60 seconds. The load value (N) and compression displacement (mm) at this time are measured. From the obtained measured value, the 10% K value at 25°C after heating can be determined by the following formula. As the micro compression testing machine, for example, "Fischer Scope H-100" manufactured by FISCHER INSTRUMENTS K.K., or the like is used.

10% K value (N/mm²) at 25°C after heating = $(3/2^{1/2}) \cdot F \cdot S^{-3/2} \cdot R^{-1/2}$

F: Load value (N) when the adhesive particle after heating is 10% compressed and deformed
S: Compression displacement (mm) when the adhesive particle after heating is 10% compressed and deformed
R: Radius (mm) of adhesive particle after heating

Examples of a method of controlling the 10% K value at 25°C after heating the adhesive particles at 120°C for 1 hour within a suitable range include a method of adjusting the 10% K value of the base particle at 25°C, a method of using a preferable material for the covering portion, and a method of adjusting the content of the thermosetting resin used for the covering portion and a curing agent to be described later. In particular, when the 10% K value of the base particle at 25°C is less than 100 N/mm², it is preferable to control the 10% K value by a method using a preferable material for the covering portion.

A compression recovery rate of the adhesive particle at 25°C is preferably 5% or more, more preferably 10% or more, and preferably 50% or less, more preferably 40% or less. When the compression recovery rate of the adhesive particle at 25°C is equal to or more than the above lower limit and equal to or less than the above upper limit, the effect of the present invention can be more effectively exhibited. When the compression recovery rate of the adhesive particle at 25°C is equal to or more than the above lower limit and equal to or less than the above upper limit, peeling of the base material can be further suppressed when the adhesive particles are used in a dimmer laminate.

The compression recovery rate of the adhesive particle at 25°C can be measured as follows.

The adhesive particles are spread on a sample stage. The compression recovery rate is derived by applying a load to one sprayed adhesive particle at a smooth indenter end face of a cylinder (diameter of 50 μm, made of diamond) at 25°C in the center direction of the adhesive particle under the conditions of an original load value of 1.0 mN and a reverse load value of 10 mN using a micro compression testing machine, and analyzing a recovery behavior after the load is removed. The load-compression displacement during this period is measured, and the compression recovery rate can be obtained from the following equation. The loading rate is 0.33 mN/sec. As the micro compression testing machine, for example, "Fischer Scope H-100" manufactured by FISCHER INSTRUMENTS K.K., or the like is used.

```
Compression recovery rate (%) = [L2/L1] x 100
```

L1: Compression displacement from the origin load value to the reverse load value when a load is applied
L2: Unloading displacement from the reverse load value to the origin load value when a load is released

From the viewpoint of further enhancing the adhesiveness, a particle diameter of the adhesive particles is preferably 1 um or more, more preferably 3 um or more, still more preferably 10 um or more, and preferably 150 um or less, more preferably 100 um or less, still more preferably 50 um or less.

The particle diameter of the adhesive particle means a diameter when the adhesive particle is a true sphere. When the adhesive particle has a shape other than a true sphere, the particle diameter of the adhesive particle means a diameter when it is assumed that the adhesive particle is a true sphere corresponding to the volume. The particle diameter of the adhesive particle is preferably an average particle diameter, and more preferably a number average particle diameter. The average particle diameter of the adhesive particle can be measured by an arbitrary particle size distribution measuring apparatus. For example, the particle diameter can be measured using a particle size distribution measuring apparatus using principles such as laser light scattering, electric resistance change, and image analysis after imaging can be used. In addition, specific examples of a method for measuring the particle diameter of the adhesive particle include a method for measuring the particle diameter of about 100,000 adhesive particles using a particle size distribution measuring device ("Multisizer 4" manufactured by Beckman Coulter, Inc.) and measuring the average value.

From the viewpoint of controlling the gap with higher accuracy, a CV value of the particle diameter of the adhesive particle is preferably 10% or less, and more preferably 7% or less. In view of the role of the conventional spacer particles, the CV value of the particle diameter of the adhesive particle is preferably as small as possible. On the other hand, in the laminate of the present invention, the CV value of the particle diameter of the adhesive particle is preferably equal to or less than the above upper limit, whereby the adhesive particles can follow the laminate, and the movement of the adhesive particles can be suppressed particularly when the laminate has a curved surface portion or when an operation such as bending the laminate is performed. A lower limit of the CV value of the particle diameter of the adhesive particle is not particularly limited. The CV value of the particle diameter of the adhesive particle may be 0% or more or 7% or more.

The CV value (variation coefficient) of the particle diameter of the adhesive particle can be measured as follows.

$$\text{CV value (\%)} = (\rho/\text{Dn}) \times 100$$

$\rho$: Standard deviation of particle diameter of adhesive particle
Dn: Average value of particle diameters of adhesive particles

From the viewpoint of controlling the gap between the substrates with higher accuracy, the aspect ratio of the adhesive particles is preferably 1.5 or less, and more preferably 1.3 or less. The aspect ratio indicates a major axis/minor axis. The aspect ratio is preferably determined by observing 10 arbitrary adhesive particles with an electron microscope or an optical microscope and, provided that the maximum diameter and a minimum diameter are a major axis length and a minor axis length, respectively, calculating an average value of the major axis length/minor axis length of each spherical adhesive particle descried above. A lower limit of the aspect ratio of the adhesive particles is not particularly limited. The aspect ratio of the adhesive particles may be 1.0 or more or 1.1 or more.

From the viewpoint of further enhancing the adhesiveness, in the following adhesiveness test A, the tensile yield stress of the adhesive particle is preferably 0.07 MPa or more, more preferably 0.10 MPa or more, and still more preferably 0.12 MPa or more. The upper limit of the tensile yield stress of the adhesive particle is not particularly limited. In the following adhesiveness test A, the tensile yield stress of the adhesive particle may be 0.12 MPa or less or 0.07 MPa or less.

(Adhesiveness test A)

A glass substrate is prepared as the first base material and the second base material. The adhesive particles are sprayed on the surface of the first base material so as to be 14000 particles/mm$^2$. The second base material is then placed on the adhesive particles. In accordance with the method of JIS K 6850, the adhesive particles are bonded onto the first and second base materials by heating at a pressure of 5 kgf/cm$^2$ at 120°C for 1 hour to prepare a test body (test sample). Using a Tensilon universal material testing machine (for example, "RTI-1310" manufactured by A & D Company, Limited), adhesive strength at 23°C of a test body obtained at a tensile speed of 20 mm/min and a load cell rating of 1000 N is measured. This measured value is taken as the tensile yield stress of the adhesive particle.

From the viewpoint of further enhancing the adhesiveness, in the following adhesiveness test B, 90° peel strength of the adhesive particle is preferably 0.1 N/30 mm or more, more preferably 0.5 N/30 mm or more, and still more preferably 1.0 N/30 mm or more. The upper limit of the 90° peel strength of the adhesive particle is not particularly limited. The 90° peel strength of the adhesive particle may be 10.0 N/30 mm or less, or may be 0.1 N/30 mm or less.

(Adhesiveness test B)

As the first base material and the second base material, a polyimide solution is cast on a PET film according to a known method, and drying and rubbing steps are performed to prepare a film with an orientation layer. The adhesive particles are sprayed on the surface of the first base material so as to be 14000 particles/mm². Next, in accordance with the method of JIS K 6850, the adhesive particles are bonded onto the first and second base materials by heating at a pressure of 5 kgf/cm² at 120°C for 1 hour to prepare a test body (test sample). Measurement is performed at a tensile speed of 50 mm/sec using a tensile tester (for example, "Autograph AGS" manufactured by Shimadzu Corporation) in accordance with JIS K 6854: 1999. This measured value is taken as the 90° peel strength of the adhesive particle.

The adhesive particles according to the present invention are suitably used as the material of the spacer particles. The adhesive particles according to the present invention are particularly suitably used as the material of the spacer particles in a dimmer laminate. The adhesive particles may be used as the material of spacer particles for dimming glass or the material of spacer particles for dimming film. The adhesive particles are preferably used as the material of spacer particles for dimming glass or the material of spacer particles for dimming film.

Next, specific embodiments of the present invention will be described with reference to the drawings.

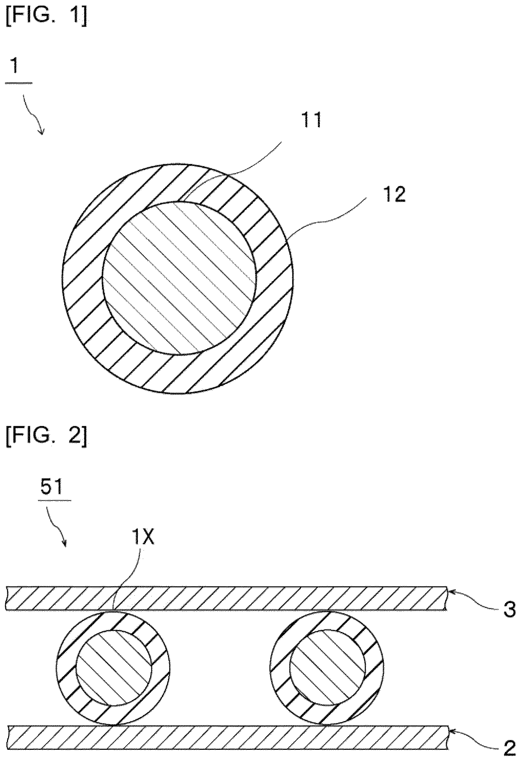

Fig. 1 is a sectional view schematically showing the adhesive particle according to a first embodiment of the present invention.

An adhesive particle 1 includes a base particle 11 and a covering portion 12 disposed on a surface of the base particle 11. The covering portion 12 covers the surface of the base particle 11. The adhesive particle 1 is a covered particle in which the surface of the base particle 11 is covered with the covering portion 12. The covering portion may or may not completely cover the surface of the base particle. The base particle may have a portion not covered with the covering portion.

In the adhesive particle 1, the covering portion 12 contains a thermosetting resin. In the adhesive particle 1, the 10% K value at 25°C is 100 N/mm² or more and 3000 N/mm² or less.

<Base particle>

The material of the base particle is not particularly limited. The base particle may contain an organic material or an inorganic material.

Examples of the organic material include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polycarbonate, polyamide, phenol formaldehyde resin, melamine formaldehyde resin, benzoguanamine formaldehyde resin, urea formaldehyde resin, phenol resin, melamine resin, benzoguanamine resin, urea resin, epoxy resin, unsaturated polyester resin, saturated polyester resin, polyethylene terephthalate, polysulfone, polyphenylene oxide, polyacetal, polyimide, polyamideimide, polyether ether ketone, polyether sulfone, and divinylbenzene copolymer. The divinylbenzene polymer may be a divinylbenzene copolymer. Examples of the divinylbenzene copolymer include divinylbenzene-styrene copolymer and divinylbenzene-(meth)acrylate copolymer. Since hardness of the adhesive particle and the base particle can be easily controlled within a preferable range, the base particle preferably contains a polymer obtained by polymerizing one or two or more polymerizable monomers having an ethylenically unsaturated group.

When the base particle is obtained by polymerizing the polymerizable monomer having an ethylenically unsaturated group, examples of the polymerizable monomer having an ethylenically unsaturated group include non-crosslinkable monomers and crosslinkable monomers.

Examples of the non-crosslinkable monomers include, as a vinyl compound, styrene monomers such as styrene, α-methyl styrene, and chlorostyrene; a vinyl ether compound such as methyl vinyl ether, ethyl vinyl ether, and propyl vinyl ether; an acid vinyl ester compound such as vinyl acetate, vinyl butylate, vinyl laurate, and vinyl stearate; and a halogen-containing monomer such as vinyl chloride, and vinyl fluoride; as a (meth)acrylic compound, an alkyl (meth)acrylate compound such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; an oxygen atom-containing (meth)acrylate compound such as 2-hydroxyethyl (meth)acrylate, glycerol (meth)acrylate, polyoxyethylene (meth)acrylate, and glycidyl (meth)acrylate; a nitrile-containing monomer such as (meth)acrylonitrile; and a halogen-containing (meth)acrylate compound such as trifluoromethyl (meth)acrylate, and pentafluoroethyl (meth)acrylate; as an α-olefin compound, an olefin compound such as diisobutylene, isobutylene, LINEALENE, ethylene, and propylene; and as a conjugated diene compound, isoprene, butadiene, and the like.

Examples of the crosslinkable monomer include, as a vinyl compound, a vinyl-based monomer such as divinylbenzene, 1,4-divinyloxybutane, and divinyl sulfone; as a (meth)acrylic compound, a polyfunctional (meth)acrylate compound such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di(meth)acrylate; as an allyl compound, triallyl (iso)cyanurate, triallyl trimellitate, diallyl phthalate, diallyl acrylamide, and diallyl ether; as a silane compound, a silane alkoxide compound such as tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyl trimethoxysilane, n-hexyltrimethoxysilane, n-octyltriethoxysilane, n-decyltrimethoxysilane, phenyltrimethoxysilane, dimethyldimethoxysilane, dimethyidiethoxysilane, diisopropyldimethoxysilane, trimethoxysilyl styrene, γ-(meth) acryloxypropyltrimethoxysilane, 1,3-divinyltetramethyldisiloxane, methylphenyldimethoxysilane, and diphenyidimethoxysilane; a polymerizable double bond-containing silane alkoxide such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyl trimethoxysilane, 3-methacryloxypropylmethyldiethoxysilane, 3-methacryloxypropyl triethoxy silane, and 3-acryloxypropyltrimethoxysilane; a cyclic siloxane such as decamethylcyclopentasiloxane; a modified (reactive) silicone oil such as one-terminal modified silicone oil, both-terminal silicone oil, and side-chain type silicone oil; and a carboxyl group-containing monomer such as (meth)acrylic acid, maleic acid, and maleic anhydride.

The base particle can be obtained by polymerizing the polymerizable monomer having an ethylenically unsaturated group. The polymerization method is not particularly limited, and examples thereof include known methods such as radical polymerization, ionic polymerization, polycondensation (condensation polymerization), addition condensation, living polymerization, and living radical polymerization. Other polymerization methods include suspension polymerization in the presence of a radical polymerization initiator.

Examples of the inorganic material include silicate glass, borosilicate glass, lead glass, soda lime glass, alumina, and alumina silicate glass.

The base particle may be formed of only the organic material, may be formed of only the inorganic material, or may be formed of both the organic material and the inorganic material. From the viewpoint of easily controlling the compression characteristics of the base particle and the adhesive particle within a suitable range, it is preferable that the base particle is formed of only an organic material or formed of both an organic material and an inorganic material.

The base particles may contain other components as necessary. Examples of the other components include a colorant, a polymerization inhibitor, a polymerization initiator, a pigment dispersant, a polymer dispersant, and a surfactant. One kind of the other components may be used alone, and two or more kinds thereof may be used in combination.

The 10% K value of the base particle at 25°C is preferably 100 N/mm$^2$ or more, more preferably 300 N/mm$^2$ or more, still more preferably 1000 N/mm$^2$ or more, and preferably 3000 N/mm$^2$ or less, more preferably 2500 N/mm$^2$ or less, still more preferably 2000 N/mm$^2$ or less. When the 10% K value of the base particle at 25°C is equal to or more than the above lower limit and equal to or less than the above upper limit, the effect of the present invention can be more effectively exhibited. In addition, scratching of the base material can be prevented. When the 10% K value of the base particle at 25°C is equal to or more than the above lower limit and equal to or less than the above upper limit, peeling of the base material can be further suppressed when the resulting adhesive particles are used in a dimmer laminate.

The 10% K value of the base particle at 25°C can be measured as follows. Using a micro compression testing machine, the base particles are compressed at a smooth indenter end face of a cylinder (diameter of 50 μm, made of diamond) under the conditions of loading at 25°C and a maximum test load of 20 mN over 60 seconds. The load value (N) and compression displacement (mm) at this time are measured. From the obtained measured value, the 10% K value at 25°C can be determined by the following formula. As the micro compression testing machine, for example, "Fischer Scope H-100" manufactured by FISCHER INSTRUMENTS K.K., or the like is used.

$$10\% \text{ K value (N/mm}^2) \text{ at } 25°C = (3/2^{1/2}) \cdot F \cdot S^{-3/2} \cdot R^{-1/2}$$

F: Load value (N) when the base particle is 10% compressed and deformed
S: Compression displacement (mm) when the base particle is 10% compressed and deformed
R: Radius of base particle (mm)

The compression recovery rate of the base particle at 25°C is preferably 5% or more, more preferably 10% or more, and preferably 50% or less, more preferably 40% or less. When the compression recovery rate of the base particle at 25°C is equal to or more than the above lower limit and equal to or less than the above upper limit, the effect of the present invention can be more effectively exhibited. When the compression recovery rate of the base particle at 25°C is equal to or more than the above lower limit and equal to or less than the above upper limit, peeling of the base material can be further suppressed when the adhesive particles are used in a dimmer laminate.

The compression recovery rate of the base particle at 25°C can be measured as follows.

The base particles are spread on a sample stage. The compression recovery rate is derived by applying a load to one sprayed base particle at a smooth indenter end face of a cylinder (diameter of 50 μm, made of diamond) at 25°C in the center direction of the base particle under the conditions of an original load value of 1.0 mN and a reverse load value of 10 mN using a micro compression testing machine, and analyzing a recovery behavior after the load is removed. The load-compression displacement during this period is measured, and the compression recovery rate can be obtained from the following equation. The loading rate is 0.33 mN/sec. As the micro compression testing machine, for example, "Fischer Scope H-100" manufactured by FISCHER INSTRUMENTS K.K., or the like is used.

$$\texttt{Compression recovery rate (\%) = [L2/L1] x 100}$$

L1: Compression displacement from the origin load value to the reverse load value when a load is applied
L2: Unloading displacement from the reverse load value to the origin load value when a load is released

From the viewpoint of further enhancing the adhesiveness, a particle diameter of the base particles is preferably 1.0 um or more, more preferably 5.0 um or more, still more preferably 10 um or more, and preferably 50 um or less, more preferably 40 um or less, still more preferably 30 um or less.

The particle diameter of the base particle is preferably an average particle diameter, and more preferably a number average particle diameter. For the particle diameter of the base particle, it is preferable to measure the particle diameters of about 100,000 base particles using a particle size distribution measurement apparatus and calculate the average particle diameter. Examples of the particle size distribution measurement apparatus include "Multisizer 4" manufactured by Beckman Coulter, Inc.

From the viewpoint of further enhancing the adhesiveness, the CV value ( variation coefficient) of the particle diameter of the base particle is preferably 10% or less, more preferably 7% or less, and still more preferably 5% or less. A lower limit of the CV value of the particle diameter of the base particle is not particularly limited. The CV value of the particle diameter of the base particle may be 2% or more.

The CV value of the particle diameter of the base particle is represented by the following formula.

$$\texttt{CV value (\%) = (ρ/Dn) × 100}$$

ρ: Standard deviation of particle diameter of base particle
Dn: Average value of particle diameters of base particles

<Covering portion>

The covering portion is disposed on the surface of the base particles.

From the viewpoint of further enhancing the adhesiveness, the surface area (coverage) of the surface of the base particle covered with the covering portion is preferably 80% or more, more preferably 90% or more, relative to 100% of the entire surface area of the base particle. The upper limit of the coverage is not particularly limited. The coverage may be 100% or less.

The coverage is set to an image magnification of 10,000 times using a field emission scanning electron microscope (FE-SEM), 20 adhesive particles are randomly selected, and the surface of each adhesive particle is observed. A percentage of the surface area of the portion covering the base particle in the obtained adhesive particle with respect to a projected area of the entire base particle is measured, and an arithmetic average thereof is taken as the coverage.

From the viewpoint of further enhancing the adhesiveness, the thickness of the covering portion is preferably 0.5 um or more, more preferably 0.7 um or more, still more preferably 1.0 um or more, and preferably 8.0 um or less, more preferably 5.0 um or less. The thickness of the covering portion means the thickness of the covering portion only at a portion with the covering portion disposed on the surface of the base particle. A portion without the covering portion disposed on the surface of the base particle is not taken into consideration when the thickness of the covering portion is calculated.

The covering portion may be a single layer or two- or more-layered (multi-layered) construction. When the covering portion is two- or more-layered (multi-layered) construction, the thickness of the covering portion means the entire thickness of the covering portion. When the covering portion is two or more layers (multilayer), the materials forming the layers of the covering portion may be different.

The thickness of the covering portion can be calculated from a difference between the particle diameter of the base particle and the particle diameter of the adhesive particle. The thickness of the covering portion can also be obtained, for example, by observing the cross section of the adhesive particle using a transmission electron microscope (TEM).

From the viewpoint of further enhancing the adhesiveness, a ratio of the thickness of the covering portion to the particle diameter of the base particle (thickness of covering portion/particle diameter of base particle) is preferably 0.001 or more, more preferably 0.01 or more, and preferably 1.0 or less, more preferably 0.5 or less, still more preferably 0.4 or less.

The covering portion contains a thermosetting resin.

Examples of the thermosetting resin include epoxy resins, crosslinkable acrylic resins, phenol resins, melamine resins, urethane resins, and crosslinkable polyamide resins. From the viewpoint of further enhancing the adhesiveness, the thermosetting resin in the covering portion preferably contains an epoxy resin, a crosslinkable acrylic resin, or a crosslinkable polyamide resin, and more preferably contains an epoxy resin.

The epoxy resin is preferably a polyfunctional epoxy resin. The polyfunctional epoxy resin may be a bifunctional epoxy resin, a bifunctional or higher functional epoxy resin, a trifunctional epoxy resin, a trifunctional or higher functional epoxy resin, a tetrafunctional epoxy resin, or a tetrafunctional or higher functional epoxy resin. Examples of the bifunctional epoxy resin include a bisphenol A type epoxy resin and a bisphenol F type epoxy resin. Examples of the trifunctional epoxy resin include a triazine-type epoxy resin and a glycidylamine-type epoxy resin. Examples of the tetrafunctional epoxy resin include a tetrakis phenol ethane epoxy resin and a glycidyl amine epoxy resin. One kind of the epoxy resin may be used alone, and two or more kinds thereof may be used in combination.

The thermosetting resin is preferably used in combination with a curing agent. The curing agent cures the thermosetting resin. The curing agent is not particularly limited. Examples of the curing agent include an imidazole curing agent, an amine curing agent, a phenol curing agent, a thiol curing agent, and an acid anhydride curing agent. One kind of the curing agents may be used alone, and two or more kinds thereof may be used in combination. From the viewpoint of easily controlling the compression characteristics of the adhesive particle within a suitable range, the curing agent is preferably an amine curing agent.

The imidazole curing agent is not particularly limited. Examples of the imidazole curing agent include an imidazole compound in which, in 2-methylimidazole, 2-ethyl-4-methylimidazole, 1-cyanoethyl-2-phenylimidazole, 1-cyanoethyl-2-phenylimidazolium trimellitate, 2,4-diamino-6-[2'-methylimidazolyl-(1')]-ethyl-s-triazine and 2,4-diamino-6-[2'-methylimidazolyl-(1')]-ethyl-s-triazineisocyanuric acid adduct, 2-phenyl-4,5-dihydroxymethylimidazole, 2-phenyl-4-methyl-5-hydroxymethylimidazole, 2-phenyl-4-benzyl-5-hydroxymethylimidazole, 2-paratoluyl-4-methyl-5-hydroxymethylimidazole, 2-metatoluyl-4-methyl-5-hydroxymethylimidazole, 2-methatoluyl-4,5-dihydroxymethylimidazole, 2-paratoluyl-4,5-dihydroxymethylimidazole or the like, the hydrogen atom at the 5-position of 1H-imidazole is substituted with a hydroxymethyl group and the hydrogen atom at the 2-position is substituted with a phenyl group or a toluyl group.

The thiol curing agent is not particularly limited. The thiol curing agent may be a polythiol curing agent. Examples of the thiol curing agent include trimethylolpropane tris-3-mercaptopropionate, pentaerythritol tetrakis-3-mercaptopropionate and dipentaerythritol hexa-3-mercaptopropionate.

The amine curing agent is not particularly limited. Examples of the amine curing agent include ethylenediamine, hexamethylenediamine, octamethylenediamine, decamethylenediamine, norbornanediamine, 3,9-bis(3-aminopropyl)-2,4,8,10-tetraspiro[5.5]undecane, bis(4-aminocyclohexyl)methane, phenylenediamine, 2,2-bis[4-(4-aminophenoxy)phenyl]propane, meta-phenylenediamine, diaminodiphenylmethane, diaminophenyl ether, meta-xylenediamine, diaminonaphthalene, bisaminomethylcyclohexane, and diaminodiphenyl sulfone. The amine curing agent is preferably ethylenediamine, hexamethylenediamine, octamethylenediamine, meta-phenylenediamine, norbornanediamine, diaminodiphenylmethane, diaminodiphenylsulfone, phenylenediamine, or 2,2-bis[4-(4-aminophenoxy)phenyl]propane. When the amine curing agent is the preferred compound, the compression characteristics of the adhesive particle can be easily controlled within a suitable range. From the viewpoint of easily controlling the compression characteristics of the adhesive particle within a suitable range, the amine curing agent is more preferably ethylenediamine, norbornanediamine, phenylenediamine, or 2,2-bis[4-(4-aminophenoxy)phenyl]propane, and still more preferably norbornanediamine.

The acid anhydride curing agent is not particularly limited. As the acid anhydride curing agent, an acid anhydride generally used as a curing agent for a thermosetting resin such as an epoxy resin can be widely used. Examples of the acid anhydride curing agent include bifunctional acid anhydride curing agents such as phthalic anhydride, tetrahydrophthalic anhydride, trialkyltetrahydrophthalic anhydride, hexahydrophthalic anhydride, methylhexahydrophthalic anhydride, methyltetrahydrophthalic anhydride, methylbutenyltetrahydrophthalic anhydride, anhydride of phthalic acid derivative, maleic anhydride, nadic anhydride, methylnadic anhydride, glutaric anhydride, succinic anhydride, glycerin bis trimellitic anhydride monoacetate, and ethylene glycol bis trimellitic anhydride, trifunctional acid anhydride curing agents such as trimellitic anhydride, and tetra- or higher functional acid anhydride curing agents such as pyromellitic anhydride, benzophenone tetracarboxylic anhydride, methylcyclohexene tetracarboxylic anhydride, and polyazelaic acid anhydride.

When the thermosetting resin and the curing agent are polymerized, the polymerization method is not particularly limited, and the polymerization can be performed by known methods such as radical polymerization, ionic polymerization, polycondensation (condensation polymerization), addition condensation, living polymerization, and living radical polymerization.

The adhesive particles can be easily obtained by performing dispersion polymerization or the like using a material containing a polyfunctional epoxy resin and a curing agent in a solution. Furthermore, the adhesive particles can be obtained by a method of suspension-polymerizing a solution in which a polyfunctional epoxy resin and a curing agent are dissolved as an oil layer, a seed polymerization method which is a method of swelling and polymerizing a solution in which the polyfunctional epoxy resin and the curing agent are dissolved using non-crosslinked seed particles, and other methods.

The content of the thermosetting resin in 100% by weight of the covering portion is preferably 30% by weight or more, more preferably 50% by weight or more, still more preferably 60% by weight or more, particularly preferably 80% by weight or more, and preferably 100% by weight or less, more preferably 95% by weight or less, and still more preferably 90% by weight or less. When the content of the thermosetting resin is equal to or more than the above lower limit and equal to or less than the above upper limit, the adhesiveness can be further enhanced.

The content of the thermosetting resin in 100% by weight of the adhesive particles is preferably 10% by weight or more, more preferably 20% by weight or more, still more preferably 30% by weight or more, particularly preferably 40% by weight or more, and preferably 75% by weight or less, more preferably 70% by weight or less, and still more preferably 60% by weight or less. When the content of the thermosetting resin is equal to or more than the above lower limit and equal to or less than the above upper limit, the adhesiveness can be further enhanced.

The covering portion preferably contains a compound having a structure represented by the following formula (1).

$$R1-(SiO_pR3R4_q)_n-R2... \qquad (1)$$

In the above formula (1), R1 and R2 each represent an organic group having an amino group, an organic group having an epoxy group, an organic group having an amide group, an organic group having an isocyanate group, or an organic group having a hydroxy group. R3 represents an alkyl group having 1 to 2 carbon atoms, an alkoxy group having 1 to 2 carbon atoms, or a vinyl group. p is 1 or 1.5. When p is 1, q is 1, and R4 represents a hydrogen atom, an alkyl group having 1 to 2 carbon atoms, an alkoxy group having 1 to 2 carbon atoms, or a vinyl group. When p is 1.5, q is 0 (R4 is not present). n represents an integer of 1 to 100.

One kind of the compound having the structure represented by the formula (1) may be used alone, and two or more kinds thereof may be used in combination.

The formula (1) is represented by the following formula (1A) when p is 1.

$$R1-(SiOR3R4)_n-R2... \qquad (1A)$$

In the formula (1A), R1 and R2 each represent an organic group having an amino group, an organic group having an epoxy group, an organic group having an amide group, an organic group having an isocyanate group, or an organic group having a hydroxy group. R3 represents an alkyl group having 1 to 2 carbon atoms, an alkoxy group having 1 to 2 carbon atoms, or a vinyl group. R4 represents a hydrogen atom, an alkyl group having 1 to 2 carbon atoms, an alkoxy group having 1 to 2 carbon atoms, or a vinyl group. n represents an integer of 1 to 100.

The formula (1) is represented by the following formula (1B) when p is 1.5.

$$R1-(SiO_{3/2}R3)_n-R2... \qquad (1B)$$

In the formula (1B), R1 and R2 each represent an organic group having an amino group, an organic group having an epoxy group, an organic group having an amide group, an organic group having an isocyanate group, or an organic group having a hydroxy group. R3 represents an alkyl group having 1 to 2 carbon atoms, an alkoxy group having 1 to 2 carbon atoms, or a vinyl group. n represents an integer of 1 to 100.

The compound having the structure represented by the formula (1B) is generally called polysilsesquioxane. When the structure represented by the formula (1B) is applied to the formula (1), q in the formula (1) is 0, and R4 is not present.

In the formulas (1), (1A), and (1B), R1 and R2 each represent an organic group having an amino group, an organic group having an epoxy group, an organic group having an amide group, an organic group having an isocyanate group, or an organic group having a hydroxy group. In the formulas (1), (1A), and (1B), R1 and R2 may be the same or different. From the viewpoint of improving the adhesiveness, R1 and R2 are each preferably an organic group having an amino group or an organic group having an epoxy group in the formulas (1), (1A), and (1B).

In the formulas (1), (1A), and (1B), R3 represents an alkyl group having 1 to 2 carbon atoms, an alkoxy group having 1 to 2 carbon atoms, or a vinyl group. From the viewpoint of further enhancing the adhesiveness, in the formulas (1), (1A), and (1B), R3 is preferably a methyl group, an ethyl group, or a vinyl group, and more preferably a methyl group.

In the formulas (1) and (1A), R4 represents a hydrogen atom, an alkyl group having 1 to 2 carbon atoms, an alkoxy group having 1 to 2 carbon atoms, or a vinyl group. From the viewpoint of further enhancing the adhesiveness, in the formulas (1) and (1A), R4 is preferably a methyl group, an ethyl group, or a vinyl group, and more preferably a methyl group.

In the formulas (1), (1A), and (1B), n represents an integer of 1 to 100. From the viewpoint of further enhancing the adhesiveness, in the formulas (1), (1A), and (1B), n is preferably an integer of 2 or more, preferably an integer of 50 or less, and more preferably an integer of 10 or less.

In the formulas (1) and (1A), R3 and R4 may be the same or different. In the formulas (1), (1A), and (1B), when n is 2 or more, a plurality of R3s may be the same or different. In the formulas (1) and (1A), when n is 2 or more, a plurality of R4s may be the same or different.

The compound having the structure represented by the formula (1) may contain the compound having the structure represented by the formula (1A), may contain a compound having a structure represented by the formula (1B), or may contain the compound having the structure represented by the formula (1A) and the compound having the structure represented by the formula (1B). The compound having the structure represented by the formula (1) may include the compound having the structure represented by the formula (1A) and the compound having the structure represented by the formula (1B). In this case, the compound having the structure represented by the formula (1) may be a compound having the structure represented by the formula (1A) and the structure represented by the formula (1B). The structure represented by the formula (1) may be the structure represented by the formula (1A) or the structure represented by the formula (1B).

From the viewpoint of further enhancing the adhesiveness, the compound having the structure represented by the formula (1) preferably includes the compound having the structure represented by the formula (1A). From the viewpoint of further enhancing the adhesiveness, the structure represented by the formula (1) is preferably the structure represented by the formula (1A).

The content of the compound having the structure represented by the formula (1) in 100% by weight of the covering portion is preferably 1% by weight or more, more preferably 5% by weight or more, still more preferably 10% by weight or more, and preferably 50% by weight or less, more preferably 40% by weight or less, still more preferably 30% by weight or less. When the content of the compound having the structure represented by the formula (1) is equal to or more than the above lower limit and equal to or less than the above upper limit, the adhesiveness can be further enhanced. The compound having the structure represented by the formula (1) may include both the compound having the structure represented by the formula (1A) and the compound having the structure represented by the formula (1B). In this case, the content represents the sum of the content of the compound having the structure represented by the formula (1A) and the content of the compound having the structure represented by the formula (1B).

The covering portion may contain other components as necessary. Examples of the other components include a colorant, a polymerization initiator, a polymerization inhibitor, an adhesion imparting agent, a coloring inhibitor, a surfactant, and a polymer dispersant. One kind of the other components may be used alone, and two or more kinds thereof may be used in combination.

(Laminate)

A laminate (hereinafter, may be referred to as a laminate (A)) according to the present invention includes a first base material, a second base material, and spacer particles arranged between the first base material and the second base material. In the laminate (A), the spacer particles adhere to the first base material and the second base material. In the laminate (A), the material of the spacer particles contains the adhesive particles. For example, the spacer particles can be formed in the laminate (A) by thermally curing the thermosetting resin or reacting the compound having the structure represented by the formula (1). The spacer particles can be bonded to the first base material and the second base material by thermally curing the thermosetting resin or reacting the compound having the structure represented by the formula (1).

Another laminate (hereinafter, may be referred to as a laminate (B)) according to the present invention includes a first base material, a second base material, and spacer particles arranged between the first base material and the second base material. In the laminate (B), the spacer particles adhere to the first base material and the second base material. In the laminate (B), the material of the spacer particles contains the adhesive particles, and the spacer particle contains a compound having a structural unit represented by the following formula (11). For example, the spacer particles can be formed in the laminate (B) by thermally curing the thermosetting resin or reacting the compound having the structure represented by the formula (1) . The spacer particles can be bonded to the first base material and the second base material by thermally curing the thermosetting resin or reacting the compound having the structure represented by the formula (1).

$$-(SiO_pR3R4_q)_n-...\qquad(11)$$

In the formula (11), R3 represents an alkyl group having 1 to 2 carbon atoms, an alkoxy group having 1 to 2 carbon atoms, or a vinyl group. p is 1 or 1.5. When p is 1, q is 1, and R4 represents a hydrogen atom, an alkyl group having 1 to 2 carbon atoms, an alkoxy group having 1 to 2 carbon atoms, or a vinyl group. When p is 1.5, q is 0 (R4 is not present). n represents an integer of 1 to 100.

Since the laminate (A) and the laminate (B) according to the present invention are provided with the above configuration, the adhesiveness can be sufficiently enhanced, peeling of the spacer particles from the base material can be suppressed, and the gap between the base materials can be controlled with high accuracy. Since the laminate (A) and the laminate (B) according to the present invention are provided with the above configuration, it is possible to prevent the base material from being scratched. In addition, since the laminate (A) and the laminate (B) according to the present invention are provided with the above configuration, it is possible to suppress peeling of the base material when the laminates are used in a dimmer laminate.

Since the laminate (A) and the laminate (B) according to the present invention are provided with the above configuration, for example, even if the laminate has a curved surface portion, the spacer particles are not crushed in the curved surface portion, and the uniformity of the gap between the base materials can be secured. Even when the laminate has the curved surface portion, peeling of the spacer particles from the base material can be suppressed, so that the uniformity of the gap between the base materials can be secured. As a result, it is possible to suppress occurrence of defects such as color unevenness of a liquid crystal display device caused by non-uniformity of the gap.

In the laminate (B), one kind of the compound having the structure represented by the formula (11) may be used alone, and two or more kinds thereof may be used in combination.

The formula (11) is represented by the following formula (11A) when p is 1.

$$-(SiOR3R4)_n-...\qquad(11A)$$

In the formula (11A), R3 represents an alkyl group having 1 to 2 carbon atoms, an alkoxy group having 1 to 2 carbon atoms, or a vinyl group. R4 represents a hydrogen atom, an alkyl group having 1 to 2 carbon atoms, an alkoxy group having 1 to 2 carbon atoms, or a vinyl group. n represents an integer of 1 to 100.

The formula (11) is represented by the following formula (11B) when p is 1.5.

$$-(SiO_{3/2}R3)_n-...\qquad(11B)$$

In the formula (11B), R3 represents an alkyl group having 1 to 2 carbon atoms, an alkoxy group having 1 to 2 carbon atoms, or a vinyl group. n represents an integer of 1 to 100.

The compound having the structural unit represented by the formula (11B) is generally called polysilsesquioxane. When the structural unit represented by the formula (11B) is applied to the formula (11), q in the formula (11) is 0, and R4 is not present.

In the formulas (11), (11A), and (11B), the right end portion and the left end portion represent binding sites with other groups.

In the formulas (11), (11A), and (11B), R3 represents an alkyl group having 1 to 2 carbon atoms, an alkoxy group having 1 to 2 carbon atoms, or a vinyl group. From the viewpoint of further enhancing the adhesiveness, in the formulas (11), (11A), and (11B), R3 is preferably a methyl group, an ethyl group, or a vinyl group, and more preferably a methyl group.

In the formulas (11) and (11A), R4 represents a hydrogen atom, an alkyl group having 1 to 2 carbon atoms, an alkoxy group having 1 to 2 carbon atoms, or a vinyl group. From the viewpoint of further enhancing the adhesiveness, in the formulas (11) and (11A), R4 is preferably a methyl group, an ethyl group, or a vinyl group, and more preferably a methyl group.

In the formulas (11), (11A), and (11B), n represents an integer of 1 to 100. From the viewpoint of further enhancing the adhesiveness, in the formulas (11), (11A), and (11B), n is preferably an integer of 2 or more, preferably an integer of 50 or less, and more preferably an integer of 10 or less.

In the formulas (11) and (11A), R3 and R4 may be the same or different. In the formulas (11), (11A), and (11B), when n is 2 or more, a plurality of R3s may be the same or different. In the formulas (11) and (11A), when n is 2 or more, a plurality of R4s may be the same or different.

The compound having the structural unit represented by the formula (11) may contain a compound having a structural unit represented by the formula (11A), may contain a compound having a structural unit represented by the formula (11B), or may contain the compound having the structural unit represented by the formula (11A) and the compound having the structural unit represented by the formula (11B). The compound having the structural unit represented by the formula (11) may include the compound having the structural unit represented by the formula (11A) and the compound having the structural unit represented by the formula (11B). In this case, the compound having the structural unit represented by the formula (11) may be a compound having the structural unit represented by the formula (11A) and the structural unit represented by the formula (11B). The structural unit represented by the formula (11) may be the structural unit represented by the formula (11A) or the structural unit represented by the formula (11B).

From the viewpoint of further enhancing the adhesiveness, the compound having the structural unit represented by the formula (11) preferably includes the compound having the structural unit represented by the formula (11A). From the viewpoint of further enhancing the adhesiveness, the structural unit represented by the formula (11) is preferably the structural unit represented by the formula (11A).

From the viewpoint of further enhancing the adhesiveness, the content of the compound having the structural unit represented by the formula (11) in 100% by weight of the spacer particles is preferably 1% by weight or more, more preferably 5% by weight or more, still more preferably 10% by weight or more, and preferably 50% by weight or less, more preferably 40% by weight or less, still more preferably 30% by weight or less. The compound having the structural unit represented by the formula (11) may include both the compound having the structural unit represented by the formula (11A) and the compound having the structural unit represented by the formula (11B). In this case, the content represents the sum of the content of the compound having the structural unit represented by the formula (11A) and the content of the compound having the structural unit represented by the formula (11B).

The spacer particles can be obtained by heating the adhesive particles. The spacer particles can be obtained, for example, by heating the adhesive particles at 80°C to 150°C for 0.5 hours to 3 hours. Regarding more specific conditions, for example, the spacer particles can be obtained by heating the adhesive particles at 120°C for 1 hour.

Fig. 2 is a sectional view schematically showing a laminate using the adhesive particle according to the first embodiment of the present invention.

A laminate 51 shown in Fig. 2 includes a first base material 2, a second base material 3, and spacer particles 1X disposed between the first base material 2 and the second base material 3. In the laminate 51, the spacer particles 1X adhere to the first base material 2 and the second base material 3. In the laminate 51, the material of the spacer particles 1X contains the adhesive particles. In the laminate 51, the spacer particle 1X contains the compound having the structural unit represented by the formula (11). The spacer particles can be formed in the laminate 51 by thermally curing the thermosetting resin or reacting the compound having the structure represented by the formula (1) . The spacer particles are bonded to the first base material and the second base material by thermally curing the thermosetting resin or reacting the compound having the structure represented by the formula (1).

The laminate may or may not have a curved surface portion. The laminate preferably has a curved surface portion. The laminate may have a bent shape or a curved shape. The laminate preferably has a bent shape or a curved shape, and is preferably used in a bent shape or a curved shape. The laminate may have a bent portion or a curved portion. The laminate, the first base material, and the second base material preferably have flexibility so that they can have a bent shape or a curved shape. When the laminate has a curved surface portion, a curvature of the curved surface portion of the laminate is preferably 300R or more and 1800R or less. Even when the laminate has a curved surface portion or the curvature of the curved surface portion of the laminate satisfies the above preferable aspect, by using the adhesive particles according to the present invention, it is possible to sufficiently enhance the adhesiveness over the entire laminate. In addition, peeling from the base material can be suppressed, and the gap between the base materials can be controlled with high accuracy.

The laminate is preferably used for a vehicle window glass, a partition, or the like. Examples of the vehicle include a vehicle, a ship, and an aircraft. The laminate is preferably used for a window glass of a vehicle such as a vehicle, a ship, or an aircraft, a partition, or the like. The laminate is preferably a window glass or a partition, and more preferably a window glass or a partition of a vehicle such as a vehicle, a ship, or an aircraft. The laminate may be a window glass of a vehicle such as a vehicle, a ship, or an aircraft, or may be a partition. The vehicle is preferably a transportation system. The partition may be a member that is disposed between seats of a vehicle and partitions the seats.

(Dimmer laminate)

The laminate may be a dimmer laminate. The laminate is suitably used for the dimmer laminate. When the laminate is the dimmer laminate, the laminate preferably further includes a dimming layer disposed between the first base material and the second base material. In the dimming laminate, the dimming layer includes the spacer particles.

The dimmer laminate may be a PDLC (Polymer Dispersed Liquid Crystal) type dimmer laminate or a SPD (Suspended Particle Device) type dimmer laminate. The dimmer laminate is preferably the SPD-type or PDLC-type dimmer laminate. The dimmer laminate may not be a liquid crystal display device.

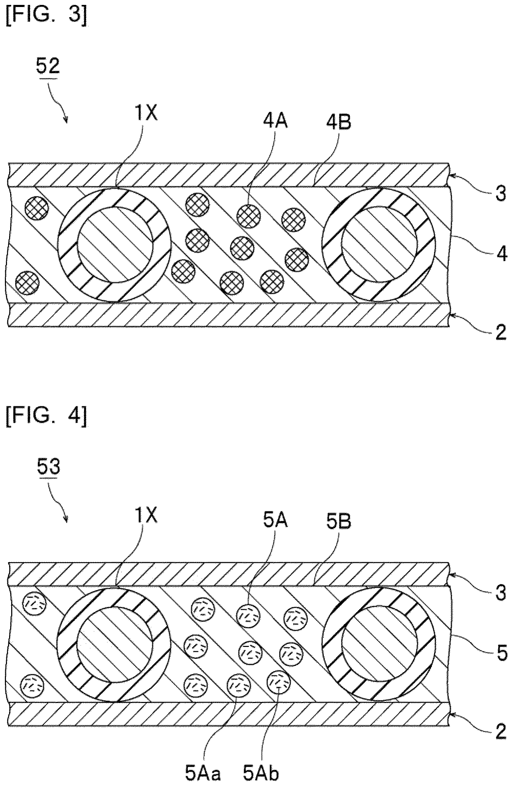

Fig. 3 is a sectional view schematically showing a PDLC-type dimmer laminate using the adhesive particle according to the first embodiment of the present invention. Fig. 4 is a sectional view schematically showing a SPD-type dimmer laminate using the adhesive particle according to the first embodiment of the present invention. In Figs. 3 and 4, the size, thickness, shape, addition amount, etc. of a dimming layer and an adhesive particle are appropriately changed from the actual size and shape for convenience of illustration.

A PDLC-type dimmer laminate 52 shown in Fig. 3 includes the first base material 2, the second base material 3, and a dimming layer 4. The dimming layer 4 is sandwiched between the first base material 2 and the second base material 3. The dimming layer 4 is disposed between the first base material 2 and the second base material 3. Between the first base material 2 and the second base material 3, a sealing agent may be disposed around the dimming layer 4.

The dimming layer 4 includes the spacer particle 1X, a liquid crystal capsule 4A, and a binder 4B. The liquid crystal capsule 4A is a liquid crystal material. The liquid crystal capsule 4A is dispersed in the binder 4B. The liquid crystal capsule 4A is held in a capsule form in the binder 4B. The liquid crystal material may be dispersed in the binder in the form of a capsule and may be dispersed in the binder as a continuous phase.

The spacer particle 1X is in contact with the first base material 2 and the second base material 3. The spacer particle 1X controls a gap between the first base material 2 and the second base material 3. The spacer particle 1X contains the compound having the structural unit represented by the formula (11). The material of the spacer particles 1X contains the adhesive particles.

Electrodes are formed on the surface of the first base material 2 and on the surface of the second base material 3 (not shown). Examples of the material for the electrode include indium tin oxide (ITO). The electrode is preferably a transparent electrode.

In the state where no electric field is applied to the PDLC-type dimmer laminate 52, the alignment of the liquid crystal molecules in the liquid crystal capsule 4A is not uniform, so that incident light is scattered in the binder 4B due to a difference in refractive index between the binder 4B and the liquid crystal material, and an opaque state is shown.

When an electric field is applied to the PDLC-type dimmer laminate 52, the liquid crystal molecules in the liquid crystal capsule 4A are arranged in a direction parallel to the electric field. In this state, since the refractive indexes of the binder 4B and the liquid crystal material are equal, light can be transmitted, and a transparent state is obtained.

A SPD-type dimmer laminate 53 shown in Fig. 4 includes the first base material 2, the second base material 3, and a dimming layer 5. The dimming layer 5 is sandwiched between the first base material 2 and the second base material 3. The dimming layer 5 is disposed between the first base material 2 and the second base material 3.

The dimming layer 5 includes the spacer particle 1X, droplets 5A of a light-modulating suspension, and a resin matrix 5B. The droplets 5A of the light-modulating suspension are dispersed in the resin matrix 5B. The droplet 5A of the light-modulating suspension is held in a droplet state in the resin matrix 5B.

The droplet 5A of the light-modulating suspension includes a dispersion medium 5Aa and light-modulating particles 5Ab. The light-modulating particles 5Ab are dispersed in the dispersion medium 5Aa.

The spacer particle 1X is in contact with the first base material 2 and the second base material 3. The spacer particle 1X controls a gap between the first base material 2 and the second base material 3. The spacer particle 1X contains the compound having the structural unit represented by the formula (11). The material of the spacer particles 1X contains the adhesive particles.

Electrodes are formed on the surface of the first base material 2 and on the surface of the second base material 3 (not shown). Examples of the material for the electrode include indium tin oxide (ITO). The electrode is preferably a transparent electrode.

In the state where no electric field is applied to the SPD-type dimmer laminate 53, incident light is absorbed, scattered or reflected to the light-modulating particles 5Ab by Brownian motion of the light-modulating particles 5Ab dispersed in the dispersion medium 5Aa included in the droplet 5A of the light-modulating suspension, and cannot be transmitted through the dimming layer 5.

When an electric field is applied to the SPD-type dimmer laminate 53, the light-modulating particles 5Ab are arranged in a direction parallel to the electric field. Thus, incident light can pass between the arranged light-modulating particles 5Ab, and can be transmitted through the dimming layer 5.

<Dimming layer>

The dimming layer preferably has a dimming property. The dimming property is a property where the visible light transmittance changes depending on whether or not an electric field is applied, and the amount of incident light can be adjusted. The dimming layer contains the spacer particles.

(PDLC type)

The dimming layer preferably further includes a binder and a liquid crystal material dispersed in the binder.

The liquid crystal material is not particularly limited, and may be any liquid crystal material as long as the liquid crystal material has a property that its alignment changes depending on application of an electric field. The liquid crystal material may be dispersed as a continuous phase in the binder, or may be dispersed in the binder in a liquid crystal drop shape or a liquid crystal capsule shape. Examples of the liquid crystal material include nematic liquid crystal and cholesteric liquid crystal.

Examples of the material of the nematic liquid crystal include a cyanobiphenyl series, a phenyl ester series, an azoxybenzene series, a fluorine-containing biphenyl series, a carbonate ester series, and a Schiff base series. One kind of the nematic liquid crystal materials may be used alone, and two or more kinds thereof may be used in combination.

Examples of materials of the cholesteric liquid crystal include a steroid cholesterol derivative, a nematic liquid crystal such as a Schiff base series, an azo series, an azoxy series, a benzoate ester series, a biphenyl series, a terphenyl series, a cyclohexylcarboxylate ester series, a phenylcyclohexane series, a biphenylcyclohexane series, a pyrimidine series, a dioxane series, a cyclohexylcyclohexane ester series, a cyclohexylethane series, a cyclohexane series, a tolan series, an alkenyl series, a stilbene series and a condensed polycyclic series, smectic liquid crystal, and materials obtained by adding a chiral component including an optically active material such as a Schiff base series, an azo series, an ester series, and a biphenyl series to mixed liquid crystals thereof. One kind of the cholesteric liquid crystal materials may be used alone, and two or more kinds thereof may be used in combination.

The binder holds the liquid crystal material and suppresses the flow of the liquid crystal material. The binder is not particularly limited as long as it does not dissolve in the liquid crystal material, has a strength that can withstand external force, and has high transparency to reflected light and incident light. Examples of materials for the binder include water-soluble polymer materials such as gelatin, polyvinyl alcohol, cellulose derivatives, polyacrylic acid polymers, ethyleneimine, polyethylene oxide, polyacrylamide, polystyrene sulfonate, polyamidine, and isoprene sulfonic acid polymers, and materials that can be made into an aqueous emulsion such as a fluororesin, a silicone resin, an acrylic resin, a urethane resin, and an epoxy resin. One kind of the materials for the binder may be used alone, and two or more kinds thereof may be used in combination.

The binder is preferably cross-linked with a cross-linking agent. The cross-linking agent is not particularly limited as long as it is one in which crosslinking is formed between the binders and which hardens the binder, makes the binder hardly soluble, or makes the binder insoluble. Examples of the cross-linking agent include acetaldehyde, glutaraldehyde, glyoxal, potassium alum hydrate of a multivalent metal salt compound, adipic acid dihydrazide, melamine formalin oligomer, ethylene glycol diglycidyl ether, polyamide epichlorohydrin, and polycarbodiimide. One kind of the crosslinking agents may be used alone, and two or more kinds thereof may be used in combination.

(SPD type)

The dimming layer preferably further includes a resin matrix and a light-modulating suspension dispersed in the resin matrix.

The light-modulating suspension includes a dispersion medium and light-modulating particles dispersed in the dispersion medium.

Examples of the light-modulating particles include carbon-based materials such as polyiodide and carbon black, metal materials such as copper, nickel, iron, cobalt, chromium, titanium, and aluminum, and inorganic compound materials such as silicon nitride, titanium nitride, and aluminum oxide. These materials may be particles coated with a polymer. One kind of the light-modulating particles may be used alone, and two or more kinds thereof may be used in combination.

The dispersion medium disperses the light-modulating particles in a flowable state. Preferably, the dispersion medium is preferably a material that selectively adheres to the light-modulating particles to cover the light-modulating particles, acts to cause the light-modulating particles to be shifted to the phase-separated droplet phase at the time of phase separation from the resin matrix, has no electrical conductivity, and has no affinity with the resin matrix. Furthermore, the dispersion medium is preferably a liquid copolymer having a refractive index approximate to that of the resin matrix when the dispersion medium is made into a dimmer laminate. As the liquid copolymer, preferred is a (meth)acrylic acid ester oligomer having a fluoro group or a hydroxyl group, and more preferred is a (meth)acrylic acid ester oligomer having a fluoro group and a hydroxyl group. When such a copolymer is used, the monomer units of either the fluoro group or the hydroxyl group are faced toward the light-modulating particles, and the remaining monomer units stabilizes droplets of the light-modulating suspension in the resin matrix. Therefore, the light-modulating particles are easily dispersed in the light-modulating suspension, and at the time of the phase separation from the resin matrix, the light-modulating particles are easily introduced into the phase-separated droplets.

Examples of the (meth)acrylic acid ester oligomer having the fluoro group or the hydroxyl group include 2,2,2-trifluoroethyl methacrylate/butyl acrylate/2-hydroxyethyl acrylate copolymer, 3,5,5-trimethylhexyl acrylate/2-hydroxypropyl acrylate/fumaric acid copolymer, butyl acrylate/2-hydroxyethyl acrylate copolymer, 2,2,3,3-tetrafluoropropyl acrylate/butyl acrylate/2-hydroxyethyl acrylate copolymer, 1H,1H,5H-octafluoropentyl acrylate/butyl acrylate/2-hydroxyethyl acrylate copolymer, 1H,1H,2H,2H-heptadecafluorodecyl acrylate/butyl acrylate/2-hydroxyethyl acrylate copolymer, 2,2,2-trifluoroethyl methacrylate/butyl acrylate/2-hydroxyethyl acrylate copolymer, 2,2,3,3-tetrafluoropropyl methacrylate/butyl acrylate/2-hydroxyethyl acrylate copolymer, 1H,1H,5H-octafluoropentyl methacrylate/butyl acrylate/2-hydroxyethyl acrylate copolymer, 1H,1H,2H,2H-heptadecafluorodecyl methacrylate/butyl acrylate/2-hydroxyethyl acrylate copolymer. These (meth)acrylic acid ester oligomers have each preferably both of the fluoro group and the hydroxyl group.

The weight average molecular weight of the (meth)acrylic ester oligomer is preferably 1000 or more, more preferably 2000 or more, and preferably 20000 or less, more preferably 10000 or less.

The dimming layer can be produced using a resin material for forming the resin matrix and the light-modulating suspension.

The resin material is preferably a resin material cured by irradiation with energy rays. Examples of the resin material cured by irradiation with energy rays include a polymeric composition containing a photopolymerization initiator, and a polymeric compound curable by an energy ray such as ultraviolet rays, visible rays or an electron ray. Examples of the polymeric composition include a polymeric composition containing a polymerizable monomer having an ethylenically unsaturated group and a photopolymerization initiator. Examples of the polymerizable monomer having an ethylenically unsaturated group include non-crosslinkable monomers and crosslinkable monomers.

Examples of the non-crosslinkable monomers include, as a vinyl compound, styrene monomers such as styrene, α-methyl styrene, and chlorostyrene; a vinyl ether compound such as methyl vinyl ether, ethyl vinyl ether, and propyl vinyl ether; an acid vinyl ester compound such as vinyl acetate, vinyl butylate, vinyl laurate, and vinyl stearate; and a halogen-containing monomer such as vinyl chloride, and vinyl fluoride; as a (meth)acrylic compound, an alkyl (meth)acrylate compound such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; an oxygen atom-containing (meth)acrylate compound such as 2-hydroxyethyl (meth)acrylate, glycerol (meth)acrylate, polyoxyethylene (meth)acrylate, and glycidyl (meth)acrylate; a nitrile-containing monomer such as (meth)acrylonitrile; and a halogen-containing (meth)acrylate compound such as trifluoromethyl (meth)acrylate, and pentafluoroethyl (meth)acrylate; as an α-olefin compound, an olefin compound such as diisobutylene, isobutylene, LINEALENE, ethylene, and propylene; and as a conjugated diene compound, isoprene, butadiene, and the like.

Examples of the crosslinkable monomer include, as a vinyl compound, a vinyl-based monomer such as divinylbenzene, 1,4-divinyloxybutane, and divinyl sulfone; as a (meth)acrylic compound, a polyfunctional (meth)acrylate compound such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, 1,3-butylene glycol di(meth)acrylate, 1,4-butanediol di(meth)acrylate, 1,6-hexanediol di(meth)acrylate, and 1,9-nonanediol di(meth)acrylate; as an allyl compound, triallyl (iso)cyanurate, triallyl trimellitate, diallyl phthalate, diallyl acrylamide, and diallyl ether; as a silane compound, a silane alkoxide compound such as tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyl trimethoxysilane, n-hexyltrimethoxysilane, n-octyltriethoxysilane, n-decyltrimethoxysilane, phenyltrimethoxysilane, dimethyldimethoxysilane, dimethyidiethoxysilane, diisopropyldimethoxysilane, trimethoxysilyl styrene, γ-(meth) acryloxypropyltrimethoxysilane, 1,3-divinyltetramethyldisiloxane, methylphenyldimethoxysilane, and diphenyidimethoxysilane; a polymerizable double bond-containing silane alkoxide such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyl trimethoxysilane, 3-methacryloxypropylmethyldiethoxysilane, 3-methacryloxypropyl triethoxy silane, and 3-acryloxypropyltrimethoxysilane; a cyclic siloxane such as decamethylcyclopentasiloxane; a modified (reactive) silicone oil such as one-terminal modified silicone oil, both-terminal silicone oil, and side-chain type silicone oil; and a carboxyl group-containing monomer such as (meth)acrylic acid, maleic acid, and maleic anhydride.

Examples of the photopolymerization initiator include 2,2-dimethoxy-1,2-diphenylethane-1-one, 1-(4-(2-hydroxyethoxy)phenyl)-2-hydroxy-2-methyl-1-propane-1-one, bis(2,4,6-trimethylbenzoyl)phenylphosphine oxide, 2-hydroxy-2-methyl-1-phenylpropan-1-one, and (1-hydroxycyclohexyl) phenyl ketone.

The resin material may contain an organic solvent soluble resin, a thermoplastic resin, poly(meth)acrylic acid, and the like. Furthermore, the resin material may contain various additives, such as a coloring inhibitor, antioxidant, and adhesiveness imparting agent, and may contain a solvent.

<First base material and second base material>

The first base material is preferably a transparent base material. The second base material is preferably a transparent base material. The transparent base material is, for example, a base material having light-transmitting properties (light-transmitting base material). For example, light is transmitted from one side of the transparent base material to the other side through the transparent base material. For example, when a material on one side of the transparent base material is visually observed from the other side of the transparent base material through the transparent base material, the material can be visually recognized. The term transparent includes, for example, translucent. The transparent base material may be colorless and transparent, or colored and transparent.

The materials for the first base material and the second base material are not particularly limited. The material for the first base material may be the same as or different from the material for the second base material. Examples of the material for the first base material and the second base material include glass and a resin film. Examples of the glass include soda-lime glass for general construction, lead glass, borosilicate glass, glass having various compositions in other applications, and functional glass such as heat reflection glass, heat absorption glass, and tempered glass. Examples of the resin film include polyester films such as polyethylene terephthalate, polyolefin films such as polypropylene, and resin films such as acrylic resin films. Since the transparency, formability, bondability, workability, and others are excellent, the first base material and the second base material are preferably resin base materials, more preferably resin films, further preferably polyethylene terephthalate (PET) films.

The first base material and the second base material preferably include a base material body and a conductive film formed on a surface of the base material body so that an electric field for dimming can be applied. Examples of the conductive film include indium tin oxide (ITO), $SnO_2$, and $In_2O_3$. The conductive film is preferably a transparent conductive film.

From the viewpoint of further improving visibility of the dimmer laminate, visible light transmittance of the first base material and the second base material is preferably 75% or more, more preferably 80% or more.

The visible light transmittance of the first base material and the second base material can be measured in accordance with ISO13837:2008 by performing spectroscopic measurement or the like.

The present invention will be specifically described below by way of Examples and Comparative Examples. The present invention is not limited only to the following Examples.

The following materials were provided.

(Base particle):

Base particle A (acrylic-divinylbenzene copolymer particles, average particle diameter: 15.0 um, prepared according to Synthesis Example 1 below)
Base particle B (carbon black-dispersed acrylic-divinylbenzene copolymer particles, average particle diameter: 18.0 um, prepared according to Synthesis Example 2 below)
Base particle C (acrylic-divinylbenzene copolymer particles, average particle diameter: 15.0 um, prepared according to Synthesis Example 3 below)
Base particle D ("Micropearl SP-215" manufactured by Sekisui Chemical Co., Ltd., average particle diameter: 15.0 μm)
Base particle E (silicone particles, average particle diameter: 16.0 um, prepared according to Synthesis Example 4 below)
Base particle F (acrylic-divinylbenzene copolymer particles, average particle diameter: 20.0 um, prepared according to Synthesis Example 5 below)
Base particle G ("Micropearl SP-220" manufactured by Sekisui Chemical Co., Ltd., average particle diameter: 20.0 μm)

(Synthesis Example 1)

As seed particles, polystyrene particles having an average particle diameter of 5.0 um were provided. A mixed solution was prepared by mixing 3.5 parts by weight of the polystyrene particles, 500 parts by weight of ion-exchanged water, and 120 parts by weight of a 5 wt% polyvinyl alcohol aqueous solution. The mixed solution was dispersed by ultrasonic waves, then put into a separable flask, and stirred uniformly. Next, 47 parts by weight of isobornyl acrylate as a monomer, 12 parts by weight of divinylbenzene (purity: 96% by weight), 1.5 parts by weight of benzoyl peroxide ("NIPER BW" manufactured by NOF CORPORATION) as a polymerization initiator, 3.7 parts by weight of triethanolamine lauryl sulfate, and 28 parts by weight of ethanol were added to 300 parts by weight of ion-exchanged water to prepare an emulsion. The emulsion was added to the mixed solution in the separable flask in two times, and the mixture was stirred for 8 hours to allow the seed particles to absorb the monomer, thereby obtaining a suspension containing the seed particles in which the monomer was swollen. Thereafter, 200 parts by weight of a 5 wt% polyvinyl alcohol aqueous solution was added, heating was started, and the mixture was reacted at 85°C for 11 hours to obtain particles. The obtained particles were purified by a classification operation to obtain the base particles A.

(Synthesis Example 2)

As seed particles, polystyrene particles having an average particle diameter of 5.0 um were provided. A mixed solution was prepared by mixing 3.5 parts by weight of the polystyrene particles, 500 parts by weight of ion-exchanged water, and 120 parts by weight of a 5 wt% polyvinyl alcohol aqueous solution. The mixed solution was dispersed by ultrasonic waves, then put into a separable flask, and stirred uniformly. Next, 83 parts by weight of isobornyl acrylate as a monomer, 21 parts by weight of divinylbenzene (purity: 96% by weight), 2.7 parts by weight of benzoyl peroxide ("NIPER BW" manufactured by NOF CORPORATION) as a polymerization initiator, 6.3 parts by weight of triethanolamine lauryl sulfate, and 48 parts by weight of ethanol were added to 600 parts by weight of ion-exchanged water to prepare an emulsion. Carbon black was dispersed in the isobornyl acrylate by a known method. The emulsion was added to the mixed solution in the separable flask in two times, and the mixture was stirred for 8 hours to allow the seed particles to absorb the monomer, thereby obtaining a suspension containing the seed particles in which the monomer was swollen. Thereafter, 400 parts by weight of a 5 wt% polyvinyl alcohol aqueous solution was added, heating was started, and the mixture was reacted at 85°C for 11 hours to obtain particles. The obtained particles were purified by a classification operation to obtain the base particles B.

(Synthesis Example 3)

The base particles C were obtained in the same manner as in Synthesis Example 1 except that the amount of isoboronyl acrylate was 35 parts by weight and the amount of divinylbenzene was 23 parts by weight.

(Synthesis Example 4)

A solution A was prepared by dissolving 0.5 parts by weight of tert-butyl-2-ethylperoxyhexanoate (polymerization initiator, "Perbutyl O" manufactured by NOF CORPORATION) in 30 parts by weight of a both-terminal acrylic silicone oil ("X-22-2445" manufactured by Shin-Etsu Chemical Co., Ltd.). In addition, 0.8 parts by weight of a 40 wt% aqueous solution of triethanolamine lauryl sulfate (emulsifier) and 80 parts by weight of a 5 wt% aqueous solution of polyvinyl alcohol (polymerization degree: about 2000, saponification degree: 86.5 to 89 mol%, "GOHSENOL GH-20" manufactured by The Nippon Synthetic Chemical Industry Co., Ltd.) were mixed with 150 parts by weight of ion-exchanged water to prepare an aqueous solution B. The solution A was placed in a separable flask placed in a warm bath, and then the aqueous solution B was added thereto. Thereafter, emulsification was performed using a Shirasu Porous Glass (SPG) membrane (pore average diameter: about 20 um). Thereafter, the temperature was raised to 85°C, and polymerization was performed for 9 hours. The whole amount of the particles after polymerization was washed with water by centrifugation, then subjected to classification operation, and then freeze-dried to obtain the base particles E.

(Synthesis Example 5)

As seed particles, polystyrene particles having an average particle diameter of 5.0 um were provided. A mixed solution was prepared by mixing 3.5 parts by weight of the polystyrene particles, 500 parts by weight of ion-exchanged water, and 120 parts by weight of a 5 wt% polyvinyl alcohol aqueous solution. The mixed solution was dispersed by ultrasonic waves, then put into a separable flask, and stirred uniformly. Next, 115 parts by weight of isobornyl acrylate as a monomer, 29 parts by weight of divinylbenzene (purity: 96% by weight), 3.7 parts by weight of benzoyl peroxide ("NIPER BW" manufactured by NOF CORPORATION) as a polymerization initiator, 8.7 parts by weight of triethanolamine lauryl sulfate, and 60 parts by weight of ethanol were added to 1000 parts by weight of ion-exchanged water to prepare an emulsion. The emulsion was added to the mixed solution in the separable flask in two times, and the mixture was stirred for 8 hours to allow the seed particles to absorb the monomer, thereby obtaining a suspension containing the seed particles in which the monomer was swollen. Thereafter, 500 parts by weight of a 5 wt% polyvinyl alcohol aqueous solution was added, heating was started, and the mixture was reacted at 85°C for 11 hours to obtain particles. The obtained particles were purified by a classification operation to obtain the base particles F.

(Covering portion):

Thermosetting resin:

Epoxy resin (equal amount mixture of "EPICLON-EXA-850 CRP" manufactured by DIC Corporation and "EPICLON-EXA-4850-150" manufactured by DIC Corporation)
Polyamide resin ("ARONMIGHTY FS-1750 SV 10" manufactured by Toagosei Co., Ltd.)

Curing agent:

Curing agent I (amine curing agent, "norbornanediamine" manufactured by Mitsui Fine Chemicals, Inc Co., Ltd.)
Curing agent II (aromatic amine curing agent, "4,4'-diaminodiphenylmethane" manufactured by Tokyo Chemical Industry)

Compound having structure represented by the formula (1) :
Compound A ("X-22-163" manufactured by Shin-Etsu Chemical Co., Ltd.)

(1) Preparation of adhesive particle

(Example 1)

A reaction vessel equipped with a thermometer, a stirrer, and a cooling tube was charged with 13 parts by weight of the base particle A, 15 parts by weight of an epoxy resin, 27 parts by weight of polyvinylpyrrolidone as a dispersion stabilizer, 4.8 parts by weight of cetyltrimethylammonium bromide, and 1100 parts by weight of methanol, and the mixture was stirred at 45°C for 1 hour to be uniformly dissolved. Next, 1.2 parts by weight of the curing agent I was added to the reaction vessel, and the mixture was reacted under the conditions of 45°C and 20 hours to obtain a reaction product. The obtained reaction product was washed with methanol, and then classified to recover an adhesive particle including a base particle and a covering portion disposed on the surface of the base particle.

(Examples 2 to 9 and 11 and Comparative Examples 1 to 3)

Adhesive particles were prepared in the same manner as in Example 1 except that the type of the base particle and the configuration of the covering portion were changed as shown in Tables 1 to 4.

(Example 10)

A reaction vessel equipped with a thermometer, a stirrer, and a cooling tube was charged with 3 parts by weight of the base particle C, 15 parts by weight of a polyamide resin, 4.8 parts by weight of cetyltrimethylammonium bromide as a dispersion stabilizer, and 100 parts by weight of methanol, and the mixture was stirred at 25°C for 1 hour to be uniformly dissolved. Next, 1000 parts by weight of a 5 wt% aqueous solution of polyvinyl alcohol was added into the container to obtain a composite of the base particle and the polyamide resin. The obtained composite was freeze-dried, and then classified to recover adhesive particles.

(2) Production of dimmer laminate

SPD-type dimmer laminate:

A dimming film in which a known SPD layer was disposed was produced except that 5% by weight of the obtained adhesive particles was dispersed between two PET films on which transparent and conductive ITO was deposited. The dimming film was sandwiched between two sheets of transparent glass, a 5 kg weight was placed on the laminate, the laminate was placed on a hot plate, and the laminate was heated at 120°C for 1 hour to bond upper and lower substrates. A SPD-type dimmer laminate in which spacer particles were bonded to the first and second base materials was prepared by sandwiching the dimming film between two sheets of transparent glass.

PDLC-type dimmer laminate:

A dimming film in which a known PDLC layer was disposed was produced except that 5% by weight of the obtained adhesive particles was dispersed between two PET films on which transparent and conductive ITO was deposited. The dimming film was sandwiched between two sheets of transparent glass, a 5 kg weight was placed on the laminate, the laminate was placed on a hot plate, and the laminate was heated at 120°C for 1 hour to bond upper and lower substrates. A PDLC-type dimmer laminate in which spacer particles were bonded to the first and second base materials was prepared by sandwiching the dimming film between two sheets of transparent glass.

(Evaluation)

(1) Average particle diameter

With respect to the obtained adhesive particles, the particle diameter of about 100,000 particles was measured using a particle size distribution measuring device ("Multisizer 4" manufactured by Beckman Coulter, Inc.), and the average particle diameter was measured.

(2) Thickness of covering portion

With respect to the obtained adhesive particles, an image magnification was set to 3000 times using a field emission scanning electron microscope (FE-SEM), 100 adhesive particles were randomly selected, and the particle diameter of each adhesive particle was measured. A half value of the difference between the particle diameter of the adhesive particle and the particle diameter of the base particle was taken as the thickness of the covering portion.

(3) 10% K value at 25°C

The 10% K value at 25°C of the obtained adhesive particles before heating was measured by the above-described method using "Fischer Scope H-100" manufactured by FISCHER INSTRUMENTS K.K. The adhesive particles were heated at 120°C for 1 hour in a blower constant temperature thermostat ("DKN 302" manufactured by Yamato Scientific Co., Ltd.), and then the 10% K value of the heated adhesive particle at 25°C was measured.

(4) Compression recovery rate

The compression recovery rate when the obtained adhesive particles were 10% compressed and deformed at 25°C was measured by the above-described method.

(5) Adhesivness (tensile yield stress)

Using the obtained adhesive particles, a test body (test sample) was prepared according to the adhesiveness test A described above. The tensile yield stress of the test body at 23°C was measured using a Tensilon universal material testing machine ("RTI-1310" manufactured by A & D Company, Limited) (adhesiveness test A). The adhesiveness (tensile yield stress) was determined according to the following criteria.

[Assessment criteria for adhesiveness (tensile yield stress)]

⊙⊙: The tensile yield stress is 0.12 MPa or more
○: The tensile yield stress is 0.10 MPa or more and less than 0.12 MPa
△: The tensile yield stress is 0.07 MPa or more and less than 0.10 MPa
×: The tensile yield stress is less than 0.07 MPa.

(6) Adhesiveness (90° peel strength)

Using the obtained adhesive particles, a test body (test sample) was prepared according to the adhesiveness test B described above. In accordance with JIS K 6854: 1999, the 90° peel strength of the test body at 23°C was measured at a tensile speed of 50 mm/sec using a tensile tester ("Autograph AGS" manufactured by Shimadzu Corporation) (adhesiveness test B). The adhesiveness (90° peel strength) was determined according to the following criteria.

[Assessment criteria for adhesiveness (90° peel strength)]

⊙⊙: The 90° peel strength is 1.0 N/30 mm or more.
○: The 90° peel strength is 0.5 N/30 mm or more and less than 1.0 N/30 mm.
△: The 90° peel strength is 0.1 N/30 mm or more and less than 0.5 N/30 mm.
×: The 90° peel strength is less than 0.1 N/30 mm.

(7) Residual properties of spacer particle

The obtained dimmer laminate was curved using a cylindrical plate having a curvature of 0.1 to obtain a dimmer laminate having a curved surface portion. In the dimmer laminate, whether or not the spacer particles did not move or peel off and uniformly remained in the dimming layer was observed using a digital microscope ("VHX-2000" manufactured by KEYENCE CORPORATION). The number of spacer particles remaining in a region of 1 $cm^2$ at arbitrary five positions on the surface of a second substrate was measured. The standard deviation of the number of remaining spacer particles was determined, and the residual properties of the spacer particles were determined according to the following criteria.

[Residual properties of spacer particle]

○○: The standard deviation is less than 2
○: The standard deviation is 2 or more and less than 4
△: The standard deviation is 4 or more and less than 6
×: The standard deviation is 6 or more

(8) Gap controllability

The obtained dimmer laminate was curved using a cylindrical plate having a curvature of 0.1 to obtain a dimmer laminate having a curved surface portion. For the dimmer laminate, the thickness of the dimming layer was measured using a scanning electron microscope. A ratio of the minimum value of the thickness of the dimming layer to the maximum value of the thickness of the dimming layer (minimum value of the thickness of the dimming layer/maximum value of the thickness of the dimming layer) was calculated, and the gap controllability was determined according to the following criteria.

[Assessment criteria for gap controllability]

○○: The ratio (minimum value of the thickness of the dimming layer/maximum value of the thickness of the dimming layer) is 0.95 or more
○: The ratio (minimum value of the thickness of the dimming layer/maximum value of the thickness of the dimming layer) is 0.90 or more and less than 0.95
△: The ratio (minimum value of the thickness of the dimming layer/maximum value of the thickness of the dimming layer) is 0.70 or more and less than 0.90
×: The ratio (minimum value of the thickness of the dimming layer/maximum value of the thickness of the dimming layer) is less than 0.70

The composition and results of the adhesive particles are shown in Tables 1 to 4 below.

[Table 1]

| | | | Example 1 | Example 2 | Example 3 | Example 4 |
|---|---|---|---|---|---|---|
| Base particle | Type | - | A | B | C | F |
| | 10% K value | N/mm$^2$ | 1660 | 2000 | 2800 | 1500 |
| | Average particle diameter | μm | 15.0 | 18.0 | 15.0 | 20.0 |

(continued)

| | | | | Example 1 | Example 2 | Example 3 | Example 4 |
|---|---|---|---|---|---|---|---|
| Covering portion | Thermosetting resin | Type | - | Epoxy resin | Epoxy resin | Epoxy resin | Epoxy resin |
| | | Content | wt% | 91 | 92 | 91 | 92 |
| | Compound having structure represented by formula (1) | Type | - | - | - | - | - |
| | | Content | wt% | 0 | 0 | 0 | 0 |
| | Curing agent | Type | - | I | I | I | I |
| | | Content | wt% | 9 | 8 | 9 | 8 |
| | Thickness | | $\mu$m | 2.0 | 2.0 | 2.0 | 1.5 |
| Adhesive particle | Average particle diameter | | $\mu$m | 19.0 | 22.0 | 19.0 | 23.0 |
| | 10% K value at 25°C before heating | | N/mm$^2$ | 2000 | 2100 | 2850 | 1800 |
| | 10% K value at 25°C after heating | | N/mm$^2$ | 2100 | 2150 | 3200 | 1930 |
| | Compression recovery rate | | % | 28 | 30 | 35 | 32 |
| Evaluation | Adhesiveness (tensile yield stress) | | - | ○○ | ○○ | ○ | ○○ |
| | Adhesiveness (90° peel strength) | | - | ○○ | ○○ | ○ | ○○ |
| | Residual properties of spacer particle | | - | ○ | ○ | ○ | ○ |
| | Gap controllability | | - | ○○ | ○○ | ○ | ○○ |

[Table 2]

| | | | | Example 5 | Example 6 | Example 7 | Example 8 |
|---|---|---|---|---|---|---|---|
| Base particle | Type | | - | A | F | F | F |
| | 10% K value | | N/mm$^2$ | 1660 | 1500 | 1500 | 1500 |
| | Average particle diameter | | $\mu$m | 15.0 | 20.0 | 20.0 | 20.0 |
| Covering portion | Thermosetting resin | Type | - | Epoxy resin | Epoxy resin | Epoxy resin | Epoxy resin |
| | | Content | wt% | 91 | 90 | 73 | 74 |
| | Compound having structure represented by formula (1) | Type | - | - | - | A | A |
| | | Content | wt% | 0 | 0 | 18 | 19 |
| | Curing agent | Type | - | I | I | I | I |
| | | Content | wt% | 9 | 10 | 9 | 7 |
| | Thickness | | $\mu$m | 0.6 | 0.3 | 1.0 | 2.0 |
| Adhesive particle | Average particle diameter | | $\mu$m | 16.2 | 20.6 | 22.0 | 24.0 |
| | 10% K value at 25°C before heating | | N/mm$^2$ | 1700 | 1500 | 1600 | 1500 |
| | 10% K value at 25°C after heating | | N/mm$^2$ | 1750 | 1600 | 1650 | 1530 |
| | Compression recovery rate | | % | 28 | 32 | 28 | 28 |

(continued)

| | | | Example 5 | Example 6 | Example 7 | Example 8 |
|---|---|---|---|---|---|---|
| Evaluation | Adhesiveness (tensile yield stress) | - | ○ | Δ | ○ | ○○ |
| | Adhesiveness (90° peel strength) | - | Δ | Δ | ○ | ○○ |
| | Residual properties of spacer particle | - | ○ | Δ | ○○ | ○○ |
| | Gap controllability | - | ○○ | ○ | ○○ | ○○ |

[0219]

[Table 3]

| | | | Example 9 | Example 10 | Example 11 |
|---|---|---|---|---|---|
| Base particle | Type | - | C | C | E |
| | 10% K value | N/mm$^2$ | 2800 | 2800 | 10 |
| | Average particle diameter | μm | 15.0 | 15.0 | 16.0 |
| Covering portion | Thermosetting resin — Type | - | Epoxy resin | Polyamide resin | Epoxy resin |
| | Thermosetting resin — Content | wt% | 91 | 100 | 91 |
| | Compound having structure represented by formula (1) — Type | - | - | - | - |
| | Compound having structure represented by formula (1) — Content | wt% | 0 | 0 | 0 |
| | Curing agent — Type | - | II | - | II |
| | Curing agent — Content | wt% | 9 | 0 | 9 |
| | Thickness | μm | 2.0 | 1.0 | 2.0 |
| Adhesive particle | Average particle diameter | μm | 19.0 | 17.0 | 20.0 |
| | 10% K value at 25°C before heating | N/mm$^2$ | 3000 | 2000 | 200 |
| | 10% K value at 25°C after heating | N/mm$^2$ | 3400 | 2200 | 230 |
| | Compression recovery rate | % | 35 | 28 | 60 |
| Evaluation | Adhesiveness (tensile yield stress) | - | Δ | ○ | Δ |
| | Adhesiveness (90° peel strength) | - | Δ | ○○ | Δ |
| | Residual properties of spacer particle | - | Δ | ○○ | Δ |
| | Gap controllability | - | ○ | ○○ | Δ |

[Table 4]

| | | | Comparative Example 1 | Comparative Example 2 | Comparative Example 3 |
|---|---|---|---|---|---|
| Base particle | Type | - | D | E | G |
| | 10% K value | N/mm$^2$ | 3500 | 10 | 3000 |
| | Average particle diameter | μm | 15.0 | 16.0 | 20.0 |

(continued)

| | | | | Comparative Example 1 | Comparative Example 2 | Comparative Example 3 |
|---|---|---|---|---|---|---|
| Covering portion | Thermosetting resin | Type | - | Epoxy resin | Epoxy resin | Epoxy resin |
| | | Content | wt% | 91 | 92 | 91 |
| | Compound having structure represented by formula (1) | Type | - | - | - | - |
| | | Content | wt% | 0 | 0 | 0 |
| | Curing agent | Type | - | I | I | II |
| | | Content | wt% | 9 | 8 | 9 |
| | Thickness | | $\mu$m | 2.0 | 2.0 | 2.0 |
| Adhesive particle | Average particle diameter | | $\mu$m | 19.0 | 20.0 | 24.0 |
| | 10% K value at 25°C before heating | | N/mm$^2$ | 3500 | 80 | 3100 |
| | 10% K value at 25°C after heating | | N/mm$^2$ | 3600 | 100 | 4000 |
| | Compression recovery rate | | % | 80 | 64 | 80 |
| Evaluation | Adhesiveness (tensile yield stress) | | - | × | Δ | × |
| | Adhesiveness (90° peel strength) | | - | × | × | × |
| | Residual properties of spacer particle | | - | × | Δ | × |
| | Gap controllability | | - | Δ | × | × |

## EXPLANATION OF SYMBOLS

[0202]

1: Adhesive particle
11: Base particle
12: Covering portion
1X: Spacer particle
2: First base material
3: Second base material
4, 5: Dimming layer
4A: Liquid crystal capsule
4B: Binder
5A: Droplet of light-modulating suspension
5Aa: Dispersion medium
5Ab: Light-modulating particle
5B: Resin matrix
51: Laminate
52: PDLC-type dimmer laminate
53: SPD-type dimmer laminate

## Claims

1. An adhesive particle comprising:

a base particle; and
a covering portion disposed on a surface of the base particle,
the covering portion containing a thermosetting resin, and a 10% K value at 25°C being 100 N/mm$^2$ or more and 3000 N/mm$^2$ or less.

2. The adhesive particle according to claim 1, wherein the 10% K value at 25°C after heating the adhesive particle at 120°C for 1 hour is 110 N/mm$^2$ or more and 3500 N/mm$^2$ or less.

3. The adhesive particle according to claim 1 or 2, wherein the 10% K value of the base particle at 25°C is 100 N/mm$^2$ or more and 3000 N/mm$^2$ or less.

4. The adhesive particle according to any one of claims 1 to 3, wherein a compression recovery rate at 25°C is 5% or more and 50% or less.

5. The adhesive particle according to any one of claims 1 to 4, wherein the covering portion has a thickness of 0.5 um or more and 5.0 um or less.

6. The adhesive particle according to any one of claims 1 to 5, wherein the covering portion contains a compound having a structure represented by the following formula (1):

$$R1\text{-}(SiO_pR3R4_q)_n\text{-}R2...\qquad(1)$$

wherein R1 and R2 each represent an organic group having an amino group, an organic group having an epoxy group, an organic group having an amide group, an organic group having an isocyanate group, or an organic group having a hydroxy group; R3 represents an alkyl group having 1 to 2 carbon atoms, an alkoxy group having 1 to 2 carbon atoms, or a vinyl group; p is 1 or 1.5; when p is 1, q is 1, and R4 represents a hydrogen atom, an alkyl group having 1 to 2 carbon atoms, an alkoxy group having 1 to 2 carbon atoms, or a vinyl group; when p is 1.5, q is 0; and n represents an integer of 1 to 100.

7. The adhesive particle according to any one of claims 1 to 6, wherein the thermosetting resin in the covering portion includes an epoxy resin.

8. A laminate comprising:

a first base material;
a second base material; and
spacer particles arranged between the first base material and the second base material,
the spacer particles adhering to the first base material and the second base material, and a material of the spacer particles including the adhesive particles according to any one of claims 1 to 7.

9. The laminate according to claim 8, wherein the spacer particle contains a compound having a structural unit represented by the following formula (11):

$$\text{-}(SiO_pR3R4_q)_n\text{-}...\qquad(11)$$

wherein R3 represents an alkyl group having 1 to 2 carbon atoms, an alkoxy group having 1 to 2 carbon atoms, or a vinyl group; p is 1 or 1.5; when p is 1, q is 1, and R4 represents a hydrogen atom, an alkyl group having 1 to 2 carbon atoms, an alkoxy group having 1 to 2 carbon atoms, or a vinyl group; when p is 1.5, q is 0; and n represents an integer of 1 to 100.

10. The laminate according to claim 8 or 9, further comprising a curved surface portion.

11. The laminate according to any one of claims 8 to 10, being a dimmer laminate, and further comprising a dimming layer disposed between the first base material and the second base material.

[FIG. 1]

1

11

12

[FIG. 2]

51

1X

3

2

[FIG. 3]

[FIG. 4]

## INTERNATIONAL SEARCH REPORT

| International application No. |
| --- |
| **PCT/JP2022/043163** |

**A. CLASSIFICATION OF SUBJECT MATTER**

*G02F 1/1339*(2006.01)i; *B32B 27/00*(2006.01)i; *C08K 5/541*(2006.01)i; *C08L 63/00*(2006.01)i; *C08L 83/04*(2006.01)i;
*C08L 101/00*(2006.01)i; *C09J 201/00*(2006.01)i; *G02F 1/19*(2019.01)i
FI:   G02F1/1339 500; B32B27/00 101; C08K5/541; C08L63/00 Z; C08L83/04; C08L101/00; C09J201/00; G02F1/19 501

According to International Patent Classification (IPC) or to both national classification and IPC

**B. FIELDS SEARCHED**

Minimum documentation searched (classification system followed by classification symbols)

G02F1/1339; B32B27/00; C08K5/541; C08L63/00; C08L83/04; C08L101/00; C09J201/00; G02F1/13; G02F1/1334;
G02F1/19

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2018/203500 A1 (SEKISUI CHEMICAL CO., LTD.) 08 November 2018 (2018-11-08) paragraphs [0059]-[0062], [0125]-[0128], [0130]-[0158] | 1-5, 7-11 |
| A | | 6 |
| Y | JP 2007-156319 A (SEKISUI CHEMICAL CO., LTD.) 21 June 2007 (2007-06-21) paragraphs [0033], [0038] | 1-5, 7-11 |
| A | | 6 |
| A | WO 2016/181860 A1 (SEKISUI CHEMICAL CO., LTD.) 17 November 2016 (2016-11-17) entire text, all drawings | 1-11 |
| A | WO 2018/016378 A1 (SEKISUI CHEMICAL CO., LTD.) 25 January 2018 (2018-01-25) entire text, all drawings | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 January 2023** | **31 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/043163**

| Patent document cited in search report | | | Publication date (day/month/year) | Patent family member(s) | | | Publication date (day/month/year) |
|---|---|---|---|---|---|---|---|
| WO | 2018/203500 | A1 | 08 November 2018 | CN | 110088160 | A | |
| | | | | KR | 10-2019-0139194 | A | |
| | | | | TW | 201843214 | A | |
| JP | 2007-156319 | A | 21 June 2007 | (Family: none) | | | |
| WO | 2016/181860 | A1 | 17 November 2016 | CN | 107250220 | A | |
| | | | | KR | 10-2018-0004700 | A | |
| | | | | TW | 201702290 | A | |
| WO | 2018/016378 | A1 | 25 January 2018 | US | 2020/0012138 | A1 | |
| | | | | entire text, all drawings | | | |
| | | | | EP | 3489741 | A1 | |
| | | | | CN | 108700765 | A | |
| | | | | KR | 10-2019-0028357 | A | |
| | | | | TW | 201835308 | A | |

Form PCT/ISA/210 (patent family annex) (January 2015)